# EUROPEAN PATENT SPECIFICATION

(11) **EP 3 276 334 B1**
(45) Date of publication and mention of the grant of the patent: **22.11.2023**
(21) Application number: 15887498.2
(22) Date of filing: 27.03.2015
(51) Int. Cl.: G02B 21/36, G02B 27/32, G06T 5/00, G06T 5/50, G01N 21/64, G02B 21/00

(54) **MICROSCOPE DEVICE, VIEWING METHOD, AND CONTROL PROGRAM**
MIKROSKOPVORRICHTUNG, BETRACHTUNGSVERFAHREN UND STEUERUNGSPROGRAMM
DISPOSITIF DE MICROSCOPE, PROCÉDÉ DE VISUALISATION ET PROGRAMME DE COMMANDE

(43) Date of publication of application: 31.01.2018
(73) Proprietor: Nikon Corporation, Tokyo 108-6290 (JP)
(72) Inventor: TOMOSUGI, Wataru, Tokyo 108-6290 (JP); KOMATSU, Ryosuke, Tokyo 108-6290 (JP)
(74) Representative: Hoffmann Eitle
(86) International application number: PCT/JP2015/059814
(87) International publication number: WO 2016/157345

(56) References cited:
- WO-A1-2012/037058
- WO-A1-2013/016356
- JP-A- 2005 331 887
- JP-A- 2005 331 889
- JP-A- 2006 194 711
- JP-A- 2010 500 563
- JP-A- 2013 101 124
- JP-B2- 5 392 406
- US-A1- 2008 032 414
- US-A1- 2012 062 722
- US-A1- 2013 128 025
- US-A1- 2014 340 482
- DANIEL J. METCALF ET AL: "Test Samples for Optimizing STORM Super-Resolution Microscopy", JOURNAL OF VISUALIZED EXPERIMENTS, no. 79, 6 September 2013 (2013-09-06), XP055514081, DOI: 10.3791/50579
- Sang Hak Lee ET AL: "Using fixed fiduciary markers for stage drift correction", Optics express, 21 May 2012 (2012-05-21), pages 12177-12183, XP055514083, United States DOI: 10.1364/OE.20.012177 Retrieved from the Internet: URL:https://www.ncbi.nlm.nih.gov/pmc/artic les/PMC3482917/pdf/oe-20-11-12177.pdf

## Description

### [Technical Field]

The present invention relates to a microscope device, an observation method, and a control program.

### [Background Art]

An example of the super-resolution microscope technology includes the single-molecule localization microscopy. For example, a known microscope device uses Stochastic Optical Reconstruction Microscopy (STORM) (see, for example, U.S. Patent Application Publication No. 2008/0182336, hereinafter Patent Literature 1). STORM is used to observe a specimen to which a fluorescent substance is adhered. The fluorescent substance becomes activate when irradiated with activation light and produces fluorescence or becomes inactivated when irradiated with excitation light in an activate state, for example. STORM activates the fluorescent substance at a low density and obtains a fluorescent image having fluorescence distributed at a low density by causing only the activated fluorescent substance to be irradiated with the excitation light, for example. In a fluorescent image, images of the fluorescent substance are individually separated so that the centroid position of each individual image can be calculated. STORM can obtain an image at a high resolution by arranging an image at a large number of positions of the fluorescent substance obtained from a large number of fluorescent images. In addition, a technology has been proposed to calculate displacement (drift amount) using fiducial markers such as fluorescent beads for observation of a specimen that travels over time.

WO 2013/016356 A1, US 2012/062722 A1, US 2008/032414 A1, US 2013/128025 A1, WO 2012/037058 A1, and US 2014/340482 A1 as well as the learned articles "Test Samples for Optimizing STORM Super-Resolution Microscopy" by Metcalf et al., J. Vis. Exp. (79), e50579, doi:10.3791/50579 and "Using fixed fiduciary markers for stage drift correction" by Lee et al., Optics Express 20(11) 12177 all form part of the state of the art relative to the present disclosure.

### [Summary of Invention]

### [Technical Problem]

Fiducial markers such as fluorescent beads emit stronger fluorescence than that of a fluorescent substance for observing a specimen. For example, when emission conditions of the activation light and the excitation light are set to suit to the fluorescent substance for observation, a detection value reaches maximum when a camera detects fluorescence emitted from fiducial markers. This lowers accuracy in detecting displacement (drift amount) on a stage and the like of a microscope. The present invention has been made in light of the situation described above to accurately detect displacement of a microscope (drift amount) and provide a microscope device, an observation method, and a control program that can accurately detect behavior of a specimen.

### Solution to Problem

A first aspect of the present invention provides a microscope device as recited in claim 1.

The dependent claims define particular embodiments of each respective aspect.

A second aspect of the present invention provides an observation method as recited in claim 10.

A third aspect of the present invention provides a control program as recited in claim 11.

The dependent claims define particular embodiments and implementations of each respective aspect.

### Advantageous Effects of the Invention

According to the present invention, a microscope device, an observation method, and a control program that can accurately detect displacement of a microscope and accurately detect behavior of a specimen can be provided.

### [Brief Description of the Drawings]

Fig. 1 is a diagram of a microscope device according to a first embodiment.
Fig. 2 is a diagram illustrating a sequence of illumination and imaging according to the first embodiment.
Fig. 3 is a diagram illustrating a sequence of illumination and imaging during a first period and a second period.
Fig. 4 is a diagram illustrating processing for detecting displacement of a specimen and processing for correcting imaging results.
Fig. 5 is a flowchart illustrating processing for setting observation conditions according to the first embodiment.
Fig. 6 is a flowchart illustrating an observation method according to the first embodiment.
Fig. 7 is a diagram of a microscope device according to a second embodiment.
Fig. 8 is a diagram illustrating a sequence of illumination and imaging according to the second embodiment.
Fig. 9 is a diagram illustrating another example of a sequence of illumination and imaging according to the second embodiment.
Fig. 10 is a diagram of a microscope device according to a third embodiment.
Fig. 11 is a diagram illustrating imagers and a part of an image-forming optical system according to the third embodiment.
Fig. 12 is a diagram illustrating a sequence of illumination and imaging according to the third embodiment.
Fig. 13 is a diagram illustrating another example of a sequence of illumination and imaging according to the third embodiment.
Fig. 14 is a diagram illustrating still another example of a sequence of illumination and imaging according to the third embodiment.
Fig. 15 is a diagram illustrating still another example of a sequence of illumination and imaging according to the third embodiment.
Fig. 16 is a flowchart illustrating processing for setting observation conditions according to the third embodiment.
Fig. 17 is a flowchart illustrating an observation method according to the third embodiment.
Fig. 18 is a diagram of a microscope device according to a fourth embodiment.
Fig. 19 is a diagram illustrating an imager and a part of an image-forming optical system according to the fourth embodiment.
Fig. 20 is a diagram of a rolling shutter light according to a fifth embodiment.
Fig. 21 (A) and Fig. 21 (B) are diagrams of a global exposure light according to the fifth embodiment.
Fig. 22 is a flowchart illustrating an observation method according to the fifth embodiment.
Fig. 23(A) and Fig. 23(B) are diagrams illustrating sequences of illumination and imaging according to a sixth embodiment.
Fig. 24 is a flowchart illustrating an observation method according to the sixth embodiment.
Fig. 25 is a diagram of a microscope device according to a seventh embodiment.

### [Description of Embodiments]

### [First Embodiment]

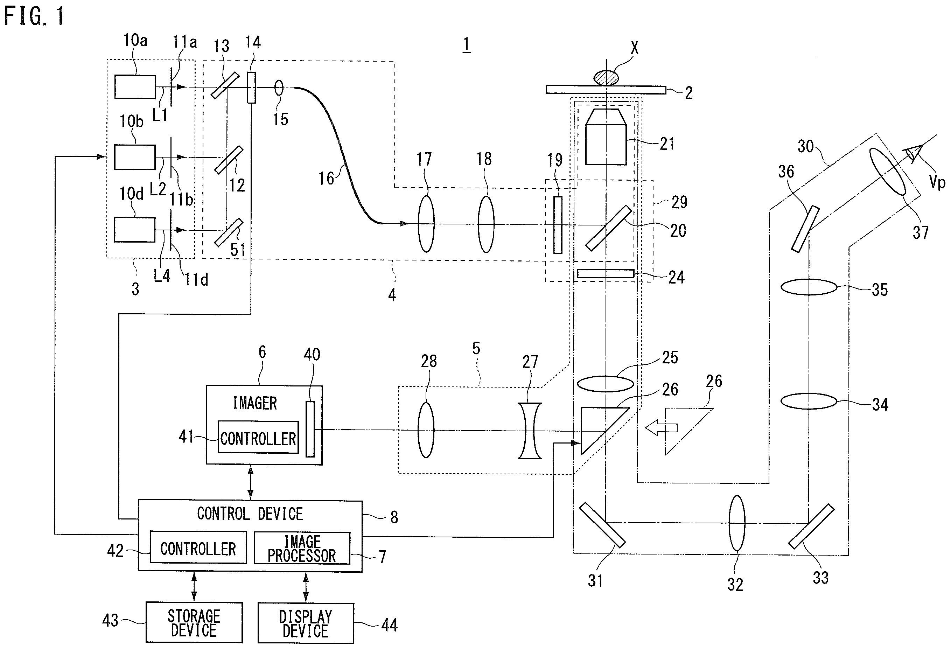

The following describes a first embodiment. A microscope device according to the present embodiment is the one that uses the single-molecule localization microscopy such as STORM and Photoactivated Localization Microscopy (PALM). Described in the present embodiment is an example in which one type of reporter dye is used to mark a specimen and fluorescence from the reporter dye and the position of the specimen are detected in a time division manner. Fig. 1 is a diagram of a microscope device 1 according to the first embodiment. A microscope device 1 includes a stage 2, a light source device 3, an illumination optical system 4, an image-forming optical system 5, an imager 6, and a control device 8. The control device 8 includes an image processor 7 and a controller 42.

The stage 2 holds a specimen X as an observation object. The stage 2 is the one that can place the specimen X on the top face, for example. The stage 2 may be a desk that does not include a mechanism for moving the specimen X or may be an XY stage that includes the mechanism for moving the specimen X, for example. The microscope device 1 does not necessarily include the stage 2.

The specimen X may be the one that contains a live cell, the one that contains a cell fixed by a tissue fixing solution, such as a formaldehyde solution, or a tissue. A fluorescent substance may be a fluorescent dye such as a cyanine dye or a fluorescent protein. The fluorescent dye includes a reporter dye that emits fluorescence when irradiated with excitation light in a state of being activate (hereinafter referred to as "activated state"). The fluorescent dye may include an activator dye that activates the reporter dye when irradiated with activation light. When the fluorescent dye does not contain the activator dye, the reporter dye becomes activated when irradiated with the activation light. The fluorescent dye is a dye pair, for example, in which two types of cyanine dye are combined with each other, examples of the dye pair including a Cy3-Cy5 dye pair, a Cy2-Cy5 dye pair, a Cy3-Alexa Fluor 647 dye pair (Alexa Fluor is a registered trademark), and a single type of dye, such as Alexa Fluor 647 (Alexa Fluor is a registered trademark). The fluorescent protein is PA-GFP or Dronpa, for example.

The light source device 3 includes an activation light source 10a, an excitation light source 10b, an excitation light source 10d, a shutter 11a, a shutter 11b, and a shutter 11d. The activation light source 10a emits activation light L1 that activates a fluorescent substance contained in the specimen X. The fluorescent substance is the one that is bound with a cell membrane protein through an antibody in a live cell or the one that is present in a fixed cell, for example. The activation light L1 activates the reporter dye contained in the specimen X. Note that the fluorescent substance herein contains a reporter dye and does not contain an activator dye. The reporter dye in the fluorescent substance becomes activated and ready for emitting fluorescence when irradiated with the activation light L1. The fluorescent substance may contain the reporter dye and the activator dye. In this case, the activator dye activates the reporter dye upon irradiation with the activation light L1.

The excitation light source 10b emits excitation light having a first wavelength to excite the fluorescent substance contained in the specimen X (hereinafter referred to as "first excitation light L2"). The fluorescent substance emits fluorescence or becomes inactivated when irradiated with the first excitation light L2 in the activate state. The fluorescent substance becomes activated again when irradiated with the activation light L1 in a state of being inactivated (hereinafter referred to as "inactivated state").

The excitation light source 10d emits auxiliary light L4 for detecting displacement (drift amount) of the microscope such as the stage 2. For example, the specimen X is provided with fiducial markers for detecting the displacement (drift amount) of the microscope. The auxiliary light is used to detect the fiducial markers. The fiducial marker includes a fluorescent substance such as a fluorescent bead, for example, and the auxiliary light excites the fiducial markers. The fiducial marker emits fluorescence when irradiated with the auxiliary light L4, for example, even without being irradiated with the activation light.

The activation light source 10a, the excitation light source 10b, and the excitation light source 10d individually include a solid-state light source, such as a laser light source, to emit laser light according to the type of the fluorescent substance, for example. The emission wavelengths of the activation light source 10a and the excitation light source 10b are selected from approximately 405 nm, approximately 457 nm, approximately 488 nm, approximately 532 nm, approximately 561 nm, approximately 640 nm, and approximately 647 nm, for example. The emission wavelength of the excitation light source 10d may be the same as or different from those of the activation light source 10a and the excitation light source 10b, for example. In the present embodiment, the emission wavelength of the activation light source 10a is approximately 405 nm and the emission wavelength of the excitation light source 10b is selected from approximately 488 nm, approximately 561 nm and approximately 647nm.

The shutter 11a is controlled by the controller 42 such that it can switch between the state that transmits the activation light L1 from the activation light source 10a and the state that blocks the activation light L1 from the activation light source 10a. The shutter 11b is controlled by the controller 42 such that it can switch between the state that transmits the first excitation light L2 from the excitation light source 10b and the state that blocks the first excitation light L2 from the excitation light source 10b. The shutter 11d is controlled by the controller 42 such that it can switch between the state that transmits the auxiliary light L4 from the excitation light source 10d and the state that blocks the auxiliary light L4 from the excitation light source 10d.

The microscope device 1 does not necessarily include at least a part of the light source device 3. For example, the light source device 3 may be unitized and provided in the microscope device 1 in a replaceable (attachable, detachable) manner. For example, the light source device 3 may be attached to the microscope device 1 when the microscope device 1 is used for observation.

The illumination optical system 4 irradiates the specimen X with the activation light L1, the first excitation light L2, and the auxiliary light L4. The illumination optical system 4 includes a dichroic mirror 12, a mirror 51, a dichroic mirror 13, acousto-optic element 14, a lens 15, a light guide member 16, a lens 17, a lens 18, a filter 19, a dichroic mirror 20, and an objective lens 21. The mirror 51 is provided on the side to which the excitation light source 10d directs the light, for example. The auxiliary light L4 from the excitation light source 10d is reflected off the mirror 51 and enters the dichroic mirror 12. The dichroic mirror 12 is provided on the side to which the excitation light source 10b directs the light, for example. The dichroic mirror 12 has a property that reflects the first excitation light L2 and transmits the auxiliary light L4. The first excitation light L2 reflected off the dichroic mirror 12 and the auxiliary light L4 transmitted through the dichroic mirror 12 enter the dichroic mirror 13 through the same optical path. The dichroic mirror 13 is provided on the side to which the activation light source 10a directs the light, for example. The dichroic mirror 13 has a property that transmits the activation light L1 and reflects the first excitation light L2 and the auxiliary light L4. The activation light L1 transmitted through the dichroic mirror 13 and the first excitation light L2 and the auxiliary light L4 reflected off the dichroic mirror 13 enter the acousto-optic element 14 through the same optical path.

The acousto-optic element 14 is an acousto-optic filter, for example. The acousto-optic element 14 can adjust the light intensity of the activation light L1, the light intensity of the first excitation light L2, and the light intensity of the auxiliary light L4 individually under the control of the controller 42. In addition, the acousto-optic element 14, under the control of the controller 42, can switch the status of the activation light L1, the first excitation light L2, and the auxiliary light L4 individually among a state in which the light passes the acousto-optic element 14 (hereinafter referred to as "light-transmitting state") and a state in which the light is blocked by the acousto-optic element 14, or a state in which the intensity of the light is lowered by the acousto-optic element 14 (hereinafter referred to as "light-blocking state") .

For example, when the fluorescent substance includes a reporter dye and does not include an activator dye, the controller 42 controls the acousto-optic element 14 so as to emit the activation light L1 in parallel with the first excitation light L2. When the fluorescent substance includes an activator dye and a reporter dye, the controller 42 controls the acousto-optic element 14 so as to emit the activation light L1 and then emit the first excitation light L2, for example. The controller 42 controls the acousto-optic element 14 so as to emit the auxiliary light L4 while the emission of the activation light L1 and the first excitation light L2 is stopped or the intensities thereof are lowered.

The lens 15 is a coupler, for example, that condenses the activation light L1, the first excitation light L2, and the auxiliary light L4 from the acousto-optic element 14 into the light guide member 16. The light guide member 16 is an optical fiber, for example, that guides the activation light L1, the first excitation light L2, and the auxiliary light L4 to the lens 17. The lens 17 is a collimator, for example, that converts the activation light L1, the first excitation light L2, and the auxiliary light L4 into a parallel light. The lens 18 condenses the activation light L1, the first excitation light L2, and the auxiliary light L4 into a location of the pupil surface of the objective lens 21, for example. The filter 19 has a property that transmits the activation light L1, the first excitation light L2, and the auxiliary light L4 and blocks at least a part of the light with another wavelength (e.g., external light, stray light), for example. The dichroic mirror 20 has a property that reflects the activation light L1, the first excitation light L2, and the auxiliary light L4 and transmits the light having a predetermined wavelength (e.g., fluorescence) from the specimen X. The light that has passed the filter 19 is reflected off the dichroic mirror 20 and enters the objective lens 21. The specimen X is arranged on a focal plane of the objective lens 21 at a time of observation.

The specimen X is irradiated with the activation light L1, the first excitation light L2, and the auxiliary light L4 through the illumination optical system 4 mentioned above. The illumination optical system 4 mentioned above is merely an example and it may be changed as appropriate. For example, a part of the illumination optical system 4 may be omitted. The illumination optical system 4 may include at least a part of the light source device 3. The illumination optical system 4 may be equipped with an aperture diaphragm, a visual field diaphragm, and the like.

The image-forming optical system 5 forms a fluorescent image from the fluorescent substance contained in the specimen X. The image-forming optical system 5 includes an objective lens 21, a dichroic mirror 20, a filter 24, a lens 25, an optical path switching member 26, a lens 27, and a lens 28. The image-forming optical system 5 shares the objective lens 21 and the dichroic mirror 20 with the illumination optical system 4. The light from the specimen X enters the filter 24 through the objective lens 21 and the dichroic mirror 20. The filter 24 has a property that selectively transmits light in a predetermined wavelength band from the light from the specimen X. The filter 24 blocks illumination light, external light, stray light, and the like reflected off the specimen X, for example. The filter 24 unitizes the filter 19 and the dichroic mirror 20, for example, to provide a filter 29 in a replaceable manner. The filter 29 is replaced, for example, according to the wavelength of the illumination light emitted from the light source device 3 (e.g., wavelength of the activation light L1, wavelength of the first excitation light L2, and wavelength of the auxiliary light L4), the wavelength of fluorescence emitted from the specimen X, and the like.

The light that has passed the filter 24 enters the optical path switching member 26 through the lens 25. The optical path switching member 26 is a prism, for example, and is provided in an optical path of the image-forming optical system 5 in a detachable manner. The optical path switching member 26 is inserted in or removed from the optical path of the image-forming optical system 5 by a driver (not shown) controlled by the controller 42, for example. The optical path switching member 26, while inserted in the optical path of the image-forming optical system 5, guides the fluorescence from the specimen X to the optical path toward the imager 6 through internal reflection. The lens 27 and the lens 28 constitute an afocal optical system, for example.

The image-forming optical system 5 such as the one mentioned above forms a fluorescent image emitted from the specimen X (e.g., fluorescent image) at the position optically conjugate to the specimen X. The image-forming optical system 5 mentioned above is merely an example and it can be changed as appropriate. For example, a part of the image-forming optical system 5 mentioned above may be omitted. The image-forming optical system 5 may be equipped with an aperture diaphragm, a visual field diaphragm, and the like.

The microscope device 1 according to the present embodiment includes an observation optical system 30 used for setting an observation range and the like. The observation optical system 30 includes, in the order from the specimen X to the viewpoint Vp of the viewer, an objective lens 21, a dichroic mirror 20, a filter 24, a lens 25, a mirror 31, a lens 32, a mirror 33, a lens 34, a lens 35, a mirror 36, and a lens 37. The observation optical system 30 shares the components from the objective lens 21 to the lens 25 with the image-forming optical system 5. The light from the specimen X, after passing the lens 25, enters the mirror 31 while the optical path switching member 26 retracts from the optical path of the image-forming optical system 5. The light reflected off the mirror 31 enters the mirror 33 through the lens 32, reflects off the mirror 33, and enters the mirror 36 through the lens 34 and the lens 35. The light reflected off the mirror 36 enters the viewpoint Vp through the lens 37. The observation optical system 30 forms an intermediate image of the specimen X in the optical path between lens 35 and the lens 37, for example. The lens 38 is an eyepiece lens, for example, with which a viewer can observe the intermediate image to set the observation range.

The imager 6 images an image formed by the image-forming optical system 5. The imager 6 includes an imaging element 40 and a controller 41. The imaging element 40 is a CMOS image sensor, for example, but it may be another image sensor or the like such as a CCD image sensor. The imaging element 40 includes a plurality of pixels arranged in two dimensions, for example, in which each pixel is arranged with a photoelectric conversion element such as a photodiode. The imaging element 40 reads an electric charge accumulated in the photoelectric conversion element by a reading circuit, for example. The imaging element 40 converts the read electric charge to digital data (e.g., gradation value), and outputs the data in which the location of the pixel is associated with the gradation value of the pixel in a digital format. The controller 41 operates the imaging element 40 according to the control signal input by the controller 42, and outputs the data on an imaged image to the controller 42. The controller 41 in the imager 6 outputs the signal indicating accumulation periods and reading periods of electric charges in the imaging element 40 (information on imaging timing) to the controller 42 in the controller 42.

The control device 8 collectively controls each unit of the microscope device 1. The control device 8 includes the controller 42 and the image processor 7. The controller 42 controls the acousto-optic element 14 according to a signal provided by the imager 6 (information indicating imaging timing), for example. The controller 42 transmits a signal transmitted from the imager 6 to the acousto-optic element 14, for example. The acousto-optic element 14 uses the signal as a trigger to switch between a light-passing state and a light-blocking state.

The controller 42 causes the acousto-optic element 14 to control the period in which the specimen X is irradiated with the activation light L1 and the period in which the specimen X is not irradiated with the activation light L1, for example. The controller 42 causes the acousto-optic element 14 to control the period in which the specimen X is irradiated with the first excitation light L2 and the period in which the specimen X is not irradiated with the first excitation light L2, for example. The controller 42 causes the acousto-optic element 14 to control the period in which the specimen X is irradiated with the auxiliary light L4 and the period in which the specimen X is not irradiated with the auxiliary light L4, for example. The controller 42 causes the acousto-optic element 14 to individually control the light intensity of the activation light L1, the light intensity of the first excitation light L2, and the light intensity of the auxiliary light L4 that irradiate the specimen X. The controller 41 in the imager 6 may be used to control the acousto-optic element 14 in place of the controller 42. The imager 6 may transmit a control signal that switches between the light-passing state and the light-blocking state to the acousto-optic element 14 according to the signal indicating accumulation periods and reading periods of electric charges (information on imaging timing) to control the acousto-optic element 14, for example.

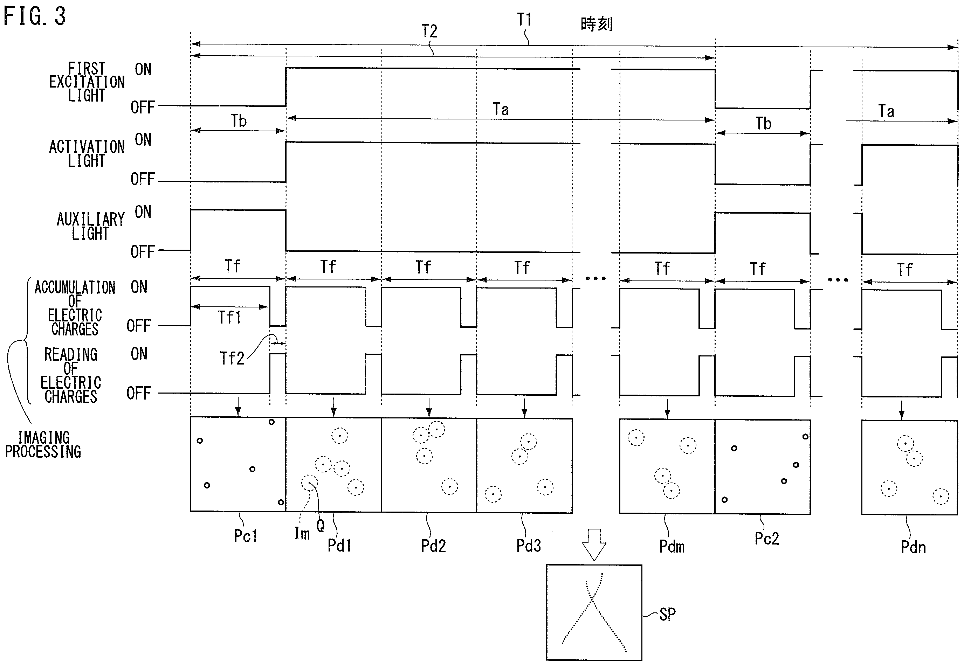

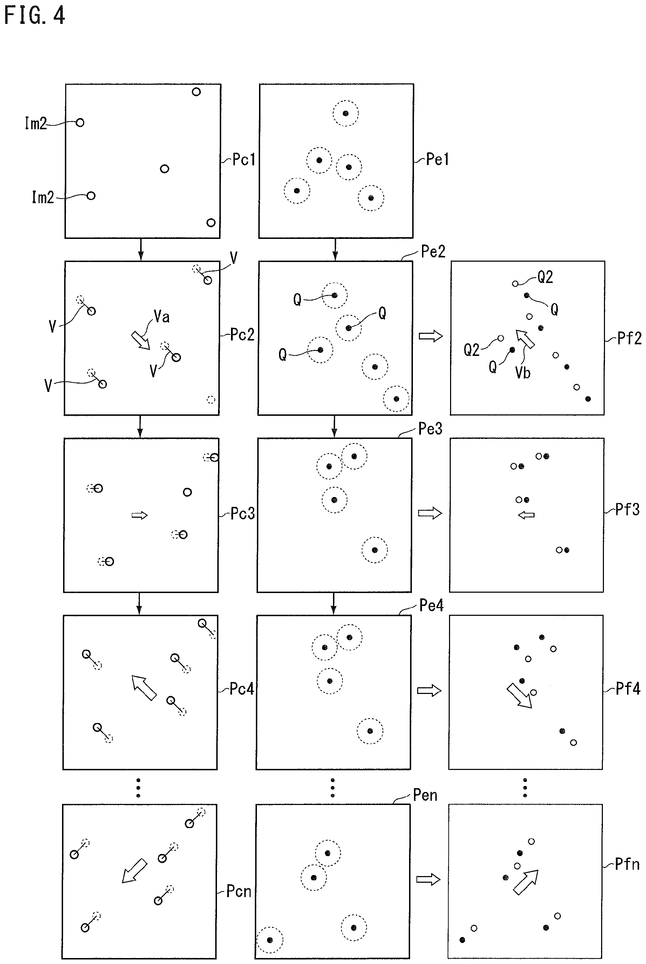

The controller 42 controls the imager 6 and causes the imaging element 40 to execute imaging. A sequence of illumination and imaging by the control of the controller 42 will be described later. The controller 42 obtains an imaging result (data on an imaged image) from the imager 6. The image processor 7 performs image processing using the imaging result of the imager 6. The processing performed by the image processor 7 will be described later with fiducial to Figs. 3, 4 and other relevant figures.

The controller 42 is communicably coupled to a storage device (memory) 43 and a display device (display) 44. The display device 44 is a liquid crystal display, for example. The display device 44 displays various types of images including an image indicating various settings of the microscope device 1, an image imaged by the imager 6, and an image generated by the imaged image, for example. The controller 42 controls the display device 44 and causes the display device 44 to display various types of images. The controller 42 transmits data on an image generated by the image processor 7 (e. g. , a STORM image, a super-resolution image such as a PALM image) to the display device 44 and causes the display device 44 to display the image, for example. The microscope device 1 can also display a super-resolution image of the specimen X to be observed in a live video, for example. The storage device 43 is a magnetic disk and an optical disc, for example, and stores various types of data including various types of setting data on the microscope device 1, data on an image imaged by the imager 6, and data on an image generated by the image processor 7. The controller 42 provides data on a super-resolution image stored in the storage device 43 to the display device 44, for example, so as to cause the display device 44 to display the super-resolution image. The controller 42 controls the storage device 43 to store various types of data in the storage device 43.

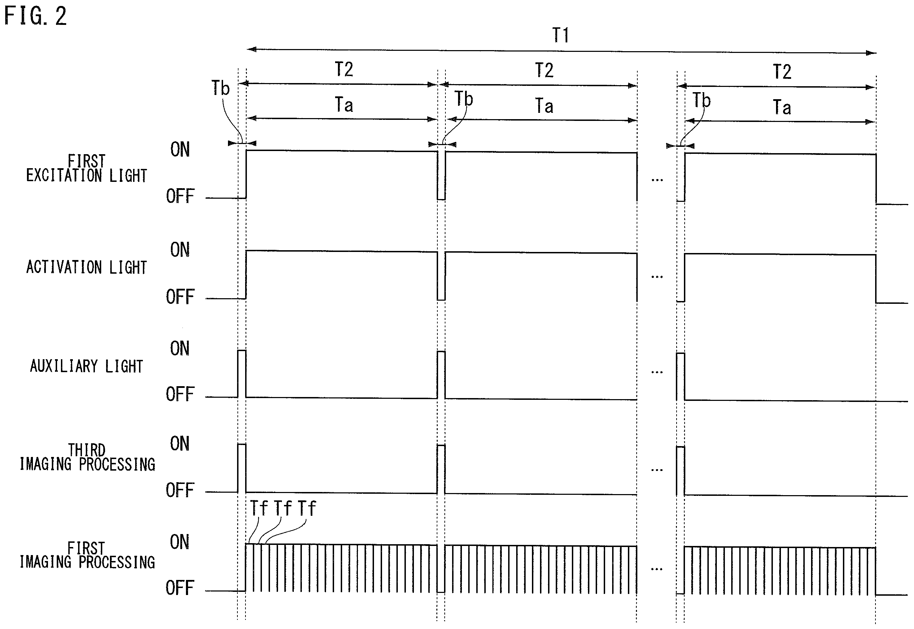

Fig. 2 is a diagram illustrating a sequence of illumination and imaging according to the first embodiment. The controller 42 causes the activation light L1 to be emitted in a first period Ta (activation light, ON) . In the first period Ta, the controller 42 causes the activated fluorescent substance to be irradiated with the first excitation light L2 and causes the imager 6 to image fluorescent images of the activated fluorescent substance in a plurality of frame periods Tf. In a second period Tb, the controller 42 causes the fiducial markers to be irradiated with the auxiliary light L4 in the state in which the first excitation light L2 is stopped or the intensity thereof is reduced and causes the imager 6 to image fluorescent images emitted from the fiducial markers. Although the first excitation light L2 and the auxiliary light L4 have different wavelengths in the present embodiment, they may have the same wavelength. The second period Tb includes a frame period Tf immediately before the first frame period Ta, for example. The controller 42 repeats the first period Ta and the second period Tb alternately during the period T1. The image processor 7 uses the imaged images in the second period Tb to correct the imaged images in the first period Ta. The image processor 7 aligns positions of the imaged images obtained in the first periods Ta included in the period T1 by performing the correction and merges bright spots, which correspond to the fluorescent images, of the imaged images to generate an image. Although Fig. 2 describes the case in which the activation light L1 is emitted in the first period Ta, the activation light L1 may be emitted in a period different from the first period Ta, for example. The activation light L1 may also be emitted, for example, before the first period Ta. The activation light L1 may also be emitted, for example, in the same period as the second period Tb or in the period different from the second period Tb (the same applies to the following).

Fig. 3 is a diagram illustrating a sequence of illumination and imaging in a first period and a second period. In Fig. 3, the reference numeral Tf is a frame period for imaging processing. The frame period Tf is a period in which an imaged image is generated. The frame period Tf includes a period Tf1 in which electric charges are accumulated and a period Tf2 in which the electric charges accumulated in the period Tf1 is read, for example. When the electric charges are accumulated and read in parallel, one of the frame periods Tf becomes the period Tf1 in which electric charges are accumulated according to the fluorescence. The length of the frame period Tf is a reciprocal of the frame rate, for example.

In the first period Ta, the controller 42 causes the specimen X to be irradiated with the activation light L1 and the first excitation light L2 and causes the imager 6 to image the specimen X. The activation light L1 and the first excitation light L2 are emitted such that the fluorescent image from the specimen X has fluorescence distributed at a low density. The imaged images obtained in the first period Ta (Pd1 to Pdm) are the imaged fluorescent images of the fluorescent substance (e.g., reporter dye) contained in the specimen X, for example, and are used for generating an image representing a configuration of the specimen X. The imager 6 generates imaged images Pd1 to Pdn as an imaging result of each frame period Tf. The image processor 7 uses at least a part of the imaged images Pd1 to Pdn to generate an image SP (e.g., super-resolution image). In the following descriptions, a series of imaging processing performed on the imaged images used to generate at least one image SP (e.g. , imaged images Pd1 to Pdn) is referred to as a period of imaging, as appropriate. The number of imaged images used to generate an image SP (e.g., imaged images Pd1 to Pdn) is a set value such as a predetermined default value and a value designated by the user, for example.

In the second period Tb, the controller 42 causes irradiation with the activation light L1 and the first excitation light L2 to stop or causes the intensity of the auxiliary light L4 to emit to be reduced, and causes the imager 6 to image the specimen X. The second period Tb occurs in a frame period Tf immediately before the first period Ta, for example. In Fig. 2, for example, the imaged image Pcl is obtained by the imaging in the first of the second period Tb. In the first period Ta which follows the second period Tb, the imaged images Pd1 to Pdm are obtained by performing imaging in the frame period Tf that occurs for a predetermined number of times (m times) . Then, the imaged image Pc2 is obtained in the imaging in the next of the second period Tb. In this case, the imaged image Pc1 according to the auxiliary light L4 is obtained at the frequency of 1/m for the imaged image (Pdl to Pdm) according to the first excitation light L2. The predetermined number of times (m) may be any number such as 1, 10, 100, 1,000, 5,000, and 10,000. In Fig. 2, the reference numeral T2 is a period that includes a second period Tb and a predetermined number of first periods Ta, which occurs continuously after the second period Tb. The controller 42 repeats the period T2 to perform a period of imaging and obtains a plurality of imaged images.

The image processor 7 uses the imaging results obtained in the second period Tb (e.g., imaged images Pc1, Pc2) to correct a least a part of the imaged images obtained in one of the first periods Ta. The image processor 7 also corrects a plurality of imaged images obtained from a plurality of first periods Ta and uses at least a part of the corrected imaged images to generate an image. For example, fluorescent images Im are discretely distributed at a low density in each of the imaged images Pd1 to Pdm. The image processor 7 calculates the position information on the fluorescent images Im (e.g., centroid position Q) by fitting the distribution of the light intensity of the fluorescent images Im to a Gaussian function, for example. The image processor 7 calculates displacement (drift amount, moving amount) by using the imaged images in the second period Tb (imaged images Pc1, Pc2) . The image processor 7 uses a calculated displacement to correct the imaged images in the first period Ta. For example, the image processor 7 uses the displacement calculated from the imaged image Pc1 and the imaged image Pc2 to correct the centroid position Q of the imaged image imaged in the first period Ta, which occurs between the imaged image Pc2 and the imaged image Pc3 . The image processor 7 generates (constructs) an image by merging a large number of corrected centroid positions Q, for example.

Fig. 4 is a diagram illustrating processing for detecting displacement of a specimen and processing for correcting imaging results. In Fig. 4, the reference numerals Pc1 to Pen indicate imaged images according to the auxiliary light L4. The image processor 7 applies the same correction amount to correct the imaged images imaged between the imaged image Pc2 and the imaged image Pc3, for example. The image processor 7 uses the imaged image Pc1 and the imaged image Pc2 to calculate the correction amount of the imaged images imaged in the first period Ta that occurs between the imaged image Pc2 and the imaged image Pc3, for example. In Fig. 4, the imaged image in the reference numeral Pe1 represents one of the imaged images Pd1 to Pdm imaged between the imaged image Pc1 and the imaged image Pc2. The same applies to imaged images Pe2 to Pen. The reference numerals Pf2 to Pfn indicate corrected images. For example, the image Pf2 is an image obtained as a result of correcting the imaged image Pe2.

Fluorescent images Im2 of the fiducial markers are distributed in each of the imaged images Pc1 to Pen. In the imaged images Pc2 to Pen, the fluorescent images imaged in the last imaging process are indicated in a dotted line. For example, the dotted parts in the imaged image Pc2 correspond to the fluorescent images Im2 in the imaged image Pc1. The image processor 7 calculates the displacement V (vector) of corresponding fluorescent images between the imaged image Pc1 and the imaged image Pc2, for example. The fiducial markers are distributed at a low density in the specimen X such that the space among the fiducial markers is larger than the presumed maximum value of the displacement (e.g. , displacement at stage 2) , for example. The image processor 7 pairs fluorescent images of the imaged images Pc1 and Pc2 positioned closest to each other, associates them with the same fiducial marker, and calculates the displacement of the corresponding fluorescent images. The image processor 7 then calculates an average Va (vector) of the displacement V of a plurality of fluorescent images. The image processor 7 may move the imaged image Pc1 and the imaged image Pc2 relatively to find the correlation therebetween and determine the relative movement amount between the imaged image Pc1 and the imaged image Pc2 having the highest correlation coefficient to be the average displacement.

The image processor 7 uses the fluorescent images projected on both of two comparative images of the imaged images Pc1 to Pen to find displacement. For example, when fluorescent images associated with the same reference maker are projected on the imaged image Pc1 and the imaged image Pc3 and such fluorescent images are not projected on the imaged image Pc2, the image processor 7 can use the fluorescent images to calculate the displacement of the fluorescent images between the imaged image Pc1 and the imaged image Pc3. The image processor 7 may calculate the displacement without using a part of the fluorescent images projected in the imaged images. For example, the image processor 7 may calculate the displacement without using the fluorescent images projected only on one of the two comparative images. For example, the image processor 7 may select an image not to be used for calculating the displacement on the basis of thresholds of the light intensity and the image size. For example, the thresholds of the light intensity and the image size may be set by the user. For example, the image processor 7 may calculate the displacement without using the fluorescent images projected on the predetermined region. The predetermined region may be selected by the user. Although the above example specifies the part of the fluorescent images projected on the imaged image that is not used for calculating the displacement, it is possible to select and set the imaged image that is used for calculating the displacement. Such a configuration enables correction with better precision.

The image processor 7 calculates the centroid position for each of the fluorescent substance in the imaged images Pe2 to Pen according to the first excitation light L2. Described herein is an example that corrects the positions of fluorescent images in the imaged image Pe2 using the imaged image Pe1 as a reference image. The image processor 7 calculates the centroid position Q of each fluorescent image in the imaged image Pe2 . The image processor 7 then performs correction using the average displacement Va between the imaged image Pc2 for correction corresponding to the imaging timing of the imaged image Pe2 to be corrected and the imaged image Pc1 for correction corresponding to the imaging timing of the imaged image Pe1 as the reference. The imaged image Pc2 for correction is the one imaged in the second period Tb immediately before the first period Ta in which the imaged image Pe2 to be corrected has been imaged, for example. The image processor 7 corrects the centroid positions Q of fluorescent images in the imaged image Pe2 to the centroid positions Q2 by the correction amount Vb (vector) which is the inverted average displacement Va, as in the image Pf2. The image processor 7, similarly to the correction of the imaged image Pe2, corrects at least a part of a plurality of imaged images imaged in the first period Ta that occurs from the imaged image Pc2 to the imaged image Pc3. The image processor 7 similarly corrects at least a part of a plurality of imaged images imaged in the first period Ta that occurs from and after the imaged image Pc3. The image processor 7 uses the reference imaged images (e.g., imaged images Pd1 to Pdm) and at least a part of the corrected images, for example, to generate an image.

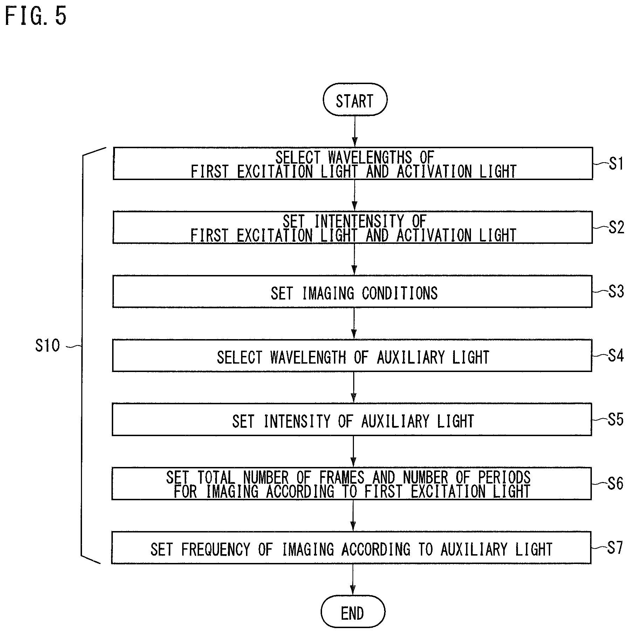

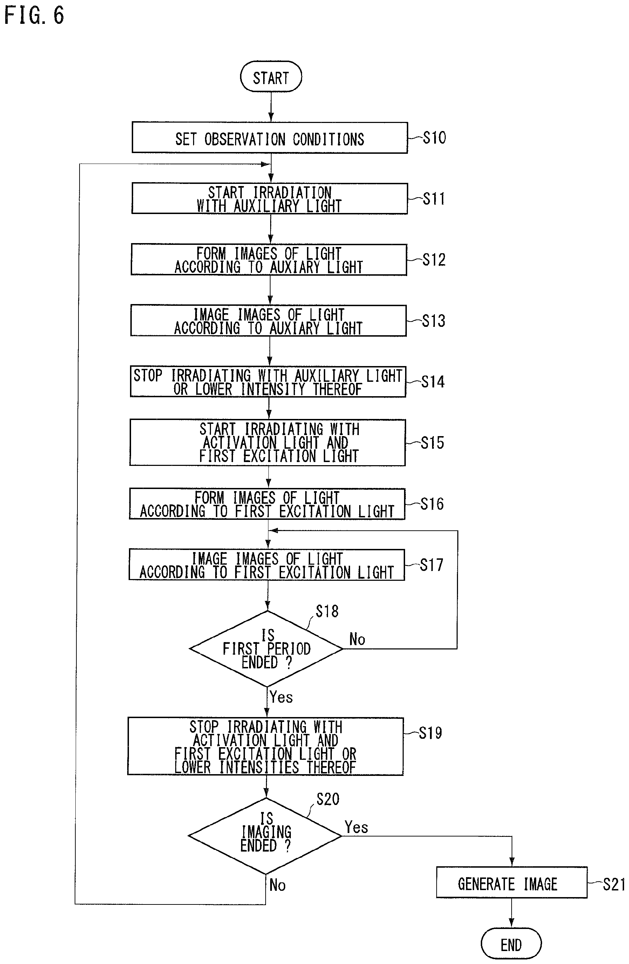

An observation method according to the present embodiment is now described on the basis of the configuration of the microscope device 1 described above. The microscope device 1 sets the observation conditions first and then obtains imaged images, for example. Before describing the entire flow of the observation method, processing of setting observation conditions is first described. Fig. 5 is a flowchart illustrating processing for setting observation conditions (processing in Step S10 described in Fig. 6).

In Step S1, for example, the user selects wavelengths of the first excitation light L2 and the activation light L1 and the controller 42 sets the wavelengths of the first excitation light L2 and the activation light L1. For example, the controller 42 causes the display device 44 to display a list of candidate wavelengths of the first excitation light L2 and the activation light L1 and accepts inputs from the user. The controller 42 may set the wavelength of the first excitation light L2 and the wavelength of the activation light L1 according to the input of the user. Alternatively, the user may specify the type of fluorescent substances and the controller 42 sets the wavelengths of the first excitation light L2 and the activation light L1 according to the type of the fluorescent substance. In this case, for example, table data associating types of fluorescent substances with the wavelengths of the first excitation light L2 and the activation light L1 may be stored in the storage device 43 in advance so that the controller 42 may use the table data to set the wavelengths of the first excitation light L2 and the activation light L1. In Step S2, the controller 42 sets the intensity of the first excitation light L2 and the intensity of the activation light L1. In the present embodiment, fluorescent images of the fluorescent substance according to the first excitation light L2 and fluorescent images of the fiducial markers according to the auxiliary light L4 are imaged in a separate period. Accordingly, the wavelengths and the intensity of the first excitation light L2 and the intensity of the activation light L1 may be set so as to be suitable for imaging the fluorescent images of the fluorescent substance, for example. The intensity of the first excitation light L2 and the intensity of activation light L1 may be included in the table data described above, for example. In Step S3, the controller 42 sets imaging conditions. For example, the controller 42 sets the length of the frame period Tf (exposure time) as an imaging condition. The exposure time may be specified in accordance with the type of the fluorescent substance and the intensity of the first excitation light L2 and may be included in the table described above, for example.

In Step S4, the user selects a wavelength of the auxiliary light L4 and the controller 42 sets the wavelength of the auxiliary light L4, for example. The processing in Step S4 may be selected from the options displayed in the display device 44, similarly to the processing in Step S1, for example. In Step S5, the controller 42 sets the intensity of the auxiliary light L4. In the present embodiment, light from the fiducial markers according to the auxiliary light L4 and fluorescence from the fluorescent substance according to the first excitation light L2 are detected in a separate period. Accordingly, the wavelengths and the intensity of the auxiliary light L4 can be set so as to be suitable for detecting the fiducial markers, for example.

In Step S6, the controller 42 sets a total number of imaging frames and a number of periods for the first excitation light L2, for example. The total number of frames is the total number of the frame periods included in the number of periods. For example, if 2, 000 frame periods are included in one period and the number of periods is 10, the total number of frames is 2,000 x 10. The controller 42 uses the total number of frames and the number of periods to calculate the number of the frame periods included in a period, for example. When values of two items are specified out of the three items of parameters: the total number of frames; the number of frame periods included in a period; and the number of periods, the controller 42 can use these values to calculate the value of the remaining one item, for example. The value of at least one of the three parameters may be provided as a default value. For example, when the value of a parameter is provided in a default value, the user may specify the value of another parameter and the controller 42 may calculate the value of the remaining parameter using the specified value and the default value. In Step S7, the controller 42 sets the frequency of imaging according to the auxiliary light L4. The frequency of imaging according to the auxiliary light L4 is expressed in terms of the number of times of imaging performed according to the first excitation light L2 for imaging performed according to the auxiliary light L4, for example. The frequency of imaging according to the auxiliary light L4 is the predetermined number of times (m), for example, in the description given with reference to Fig. 3. The controller 42 sets a value designated by the user or a default value stored in advance as the frequency of imaging according to the auxiliary light L4, for example.

A flow of the observation method according to the present embodiment is now described. Fig. 6 is a flowchart illustrating an observation method according to the present embodiment. In Step S10, the controller 42 sets observation conditions (see Fig. 5) . In Step S11, the controller 42 causes the auxiliary light L4 to be emitted and starts a second period Tb. In Step S12, the image-forming optical system 5 forms fluorescent images of the fiducial markers according to the auxiliary light L4. In Step S13, the controller 42 causes the imager 6 to image the fluorescent images of the fiducial markers according to the auxiliary light L4. In Step S14, the controller 42 causes the emission of the auxiliary light L4 to stop or causes the intensity of the emission thereof to be reduced and ends the second period Tb. In Step S15, the controller 42 causes the activation light L1 and the first excitation light L2 to be emitted and starts the first period Ta. In Step S16, the image-forming optical system 5 forms fluorescent images from the fluorescent substance according to the first excitation light L2. In Step S17, the controller 42 causes the imager 6 to image the fluorescent images from the fluorescent substance according to the first excitation light L2. In Step S8, the controller 42 determines whether to end the first period. For example, the controller 42 increments the counter of the number of times of imaging (the number of the frame periods) upon completing the imaging at S3. The controller 42 then compares the value in the counter with the set value to determine whether to end the first period Ta. The set value for the number of times of imaging is, for example, the predetermined number of times (m) in the description given with reference to Fig. 3, which is equivalent to the reciprocal of the frequency of imaging according to the auxiliary light L4. The set value for the number of times of imaging is set in the setting processing in Step S10 (see Step S7 in Fig. 5), for example. When the counter for the number of times of imaging reaches the set value, the controller 42 determines to end the first period Ta. When the value in the counter is less than the set value, for example, the controller 42 determines not to end the first period Ta (No in Step S18) and repeats the imaging processing of Step S17.

When the controller 42 determines to end the first period Ta (Yes in Step S18), the controller 42 causes the emission of the activation light L1 and the first excitation light L2 to stop or causes the intensity of the emission thereof to be reduced and ends the first period Ta in Step S19. In Step S20, the controller 42 determines whether to end imaging. For example, when the counter for the number of times of imaging reaches the total number of frames (see Step S6 in Fig. 5), the controller 42 determines to end the imaging. The controller 42, when determining not to end the imaging (No in Step S20), returns to Step S11 and causes the auxiliary light L4 to start being emitted and starts the second period Tb that occurs after the first period Ta. The controller 42 repeats the processing from Step S11 to the following steps to obtain the imaged image corresponding to the total number of frames. In Step S21, when the controller 42 determines to end the imaging (Yes in Step S19), for example, the image processor 7 generates at least one image. For example, the image processor 7 uses the number of frame periods included in a period to specify the imaged image in each period. The image processor 7 uses at least a part of the specified imaged images to generate a super-resolution image. The controller 42 causes the display device 44 to display the super-resolution image generated by the image processor 7.

If the number of periods is set to be two or larger in the setting processing in Step S10 (see Step S6 in Fig. 5), the image processor 7 uses the imaging result of a period to generate an image SP and generates images SP according to the number of periods, for example. The image processor 7 may perform a part of the processing for generating the image SP in parallel with a period of imaging. For example, the image processor 7 may obtain the data on imaged images each time when the imaging processing is performed in Step S17 and calculate the centroid positions Q of the fluorescent images Im (refer to Fig. 3) contained in the imaged image. For example, when the number of periods is set to be two or larger, the image processor 7 may use the imaging result for a period of imaging to perform at least a part of the processing for generating the image SP during the imaging of the following period. Although the first excitation light L2 and the auxiliary light L4 have different wavelengths in the present embodiment, the first excitation light L2 and the auxiliary light L4 may have the same wavelength. Likewise, in this case, the fluorescent images of the fiducial markers are imaged in the second period Tb in which the first excitation light L2 is stopped or the intensity thereof is reduced. Accordingly, the positions of the fiducial markers can be detected with higher precision, leading to accurate calculations of the drift amount. In the case that the first excitation light L2 and the auxiliary light L4 has different wavelengths, projections of fluorescent images of the fiducial markers onto an imaged image can be reduced when imaging fluorescent images emitted from the specimen X upon irradiation of the first excitation light L2. Although the activation light L1 and the first excitation light L2 are emitted in the present embodiment, the excitation light (e.g., first excitation light L2) may be emitted without the activation light L1 being emitted depending on the type of the fluorescent substance (reporter dye). The same applies to the following embodiments.

### [Second Embodiment]

The following describes a second embodiment. In the present embodiment, described is an example in which two types of reporter dye are used as labels and fluorescence from a reporter dye and a position of a specimen are detected in a time division manner. There may be one type of reporter dye, or three or more types of reporter dye. In the present embodiment, the same configurations as those in the embodiment described above are denoted with the same reference numerals and the description thereof are simplified or omitted as appropriate.

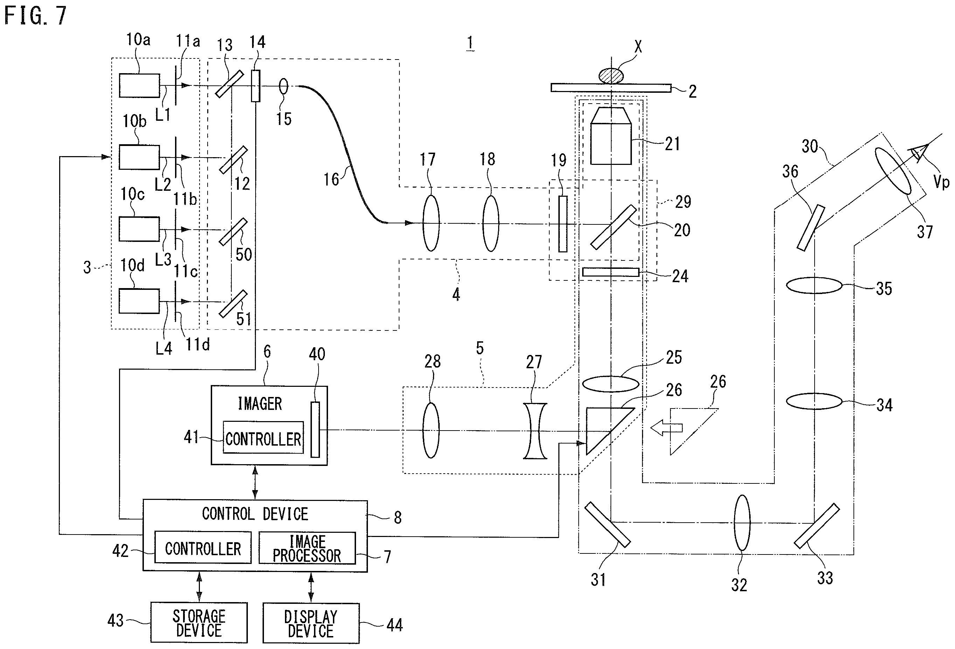

Fig. 7 is a diagram of a microscope device according to the second embodiment. In the present embodiment, the light source device 3 includes an excitation light source 10c and a shutter 11c. The excitation light source 10c emits excitation light with a second wavelength that excites the second fluorescent substance contained in the specimen X (hereinafter referred to as "second excitation light L3"). In the present embodiment, the emission wavelength of the excitation light source 10c is selected, for example, from approximately 488 nm, approximately 561 nm, and approximately 647 nm. The second fluorescent substance includes a reporter dye to be used to label the specimen X, similarly to the fluorescent substance associated with the first excitation light L2 (hereinafter referred to as "first fluorescent substance"), for example. The second fluorescent substance may or may not include an activator dye. The second fluorescent substance is the one that is bound with a protein in a cell through an antibody, for example. The type of the protein in the cell is different from that in the first fluorescent substance. The second fluorescent substance becomes activated when irradiated with the activation light L1. Although the wavelength of the activation light that activates the second fluorescent substance is the same as the wavelength of the activation light L1 that activates the first fluorescent substance, for example, the wavelength of the activation light that activates the second fluorescent substance may be different from the wavelength of the activation light L1 that activates the first fluorescent substance. The second fluorescent substance, when irradiated with the second excitation light L3 in the activated state, produces fluorescence or becomes inactivated. The second fluorescent substance, when irradiated with the activation light L1 in a state of being inactivated (hereinafter referred to as "inactivated state"), becomes activated again. The shutter 11c is controlled by the controller 42 such that it can switch between the state in which the second excitation light L3 from the excitation light source 10c is transmitted and the state in which the second excitation light L3 is blocked.

The illumination optical system 4 is provided with a dichroic mirror 50 on the side to which the excitation light source 10c directs the light. The dichroic mirror 50 has a property that reflects the second excitation light L3 and transmits the auxiliary light L4. The second excitation light L3 from the excitation light source 10c is reflected off the dichroic mirror 50, transmits the dichroic mirror 12, and enters the dichroic mirror 13. The dichroic mirror 13 and the dichroic mirror 20 have a property of reflecting the second excitation light L3, whereby the second excitation light L3 irradiates the specimen X, passing through the same optical path as that of the activation light L1, the first excitation light L2, and the auxiliary light L4. The controller 42 controls the acousto-optic element 14, for example, to switch between the light-passing state in which the second excitation light L3 transmits the acousto-optic element 14 and the light-blocking state in which the second excitation light L3 is blocked by the acousto-optic element 14 or the intensity thereof is reduced. The controller 42 causes the specimen X to be irradiated with the second excitation light L3 and causes the imager 6 to perform imaging.

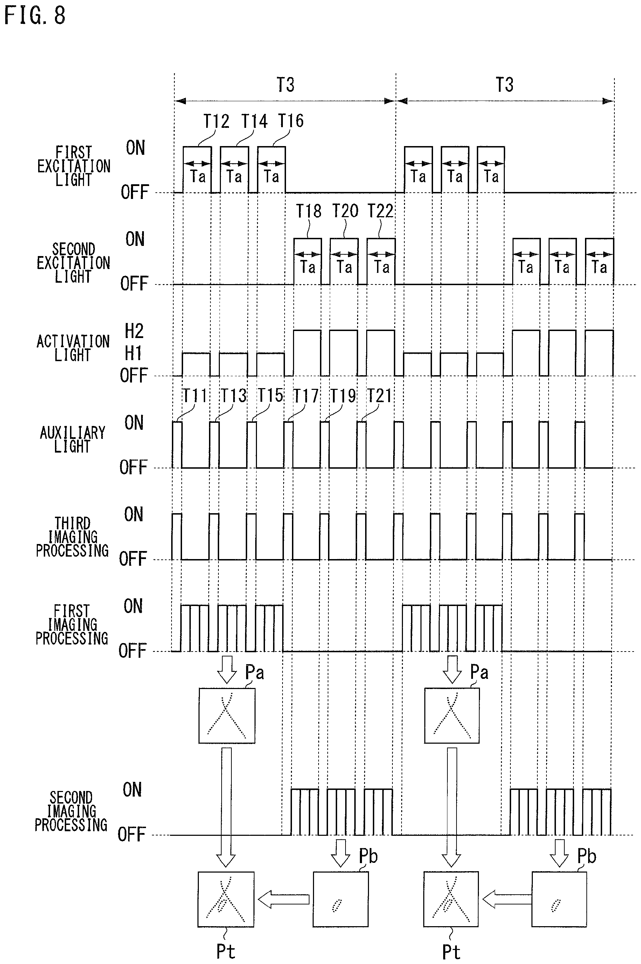

Fig. 8 is a diagram illustrating a sequence of illumination and imaging according to the present embodiment. The controller 42 sets a first wavelength period (e.g. , period T12, period T14, and period T16) and a second wavelength period (e.g., period T18, period T20, and period T22) in a period of imaging T3. In the present embodiment, the first period Ta includes either the first wavelength period or the second wavelength period. The image processor 7 uses at least a part of the imaging result of the imager 6 in the first wavelength period and at least a part of the imaging result of the imager in the second wavelength period to form at least one image. For example, the image processor 7 uses the imaging result in the first wavelength period to generate a first image Pa and uses the imaging result in the second wavelength period to generate a second image Pb, for example. The first image Pa and the second image Pb are the images representing different configurations of the specimen X, for example. The image processor 7 uses the first image Pa and the second image Pb, for example, to generate an image Pt. The image Pt is the one on which the first image Pa and the second image Pb are synthesized, for example. The image Pt may be created by using at least a part of the imaging result of the imager 6 in the first wavelength period and at least a part of the imaging result of the imager in the second wavelength period without generating the first image Pa and the second image Pb. The following provides more detailed descriptions.

The controller 42, in the first wavelength period (e.g. , period T12), causes the activation light L1 to be emitted (activation light, ON), causes the first excitation light L2 to be emitted (second excitation light, ON), and causes the imager 6 to continuously image fluorescent images from the activated first fluorescent substance in a plurality of frame periods (first imaging processing, ON). The controller 42 adjusts the intensity of the activation light L1 in the first wavelength period according to the type of the first fluorescent substance, for example. The controller 42 causes the auxiliary light L4 to be emitted in each of the frame periods (e.g. , period T11) immediately before the period in which imaging is continuously performed in the first wavelength period (e.g., period T12) and causes the imager 6 to image the fluorescent images of the fiducial markers (third imaging processing, ON) . The image processor 7 associates the imaged images of the specimen X in the period T14 with the imaged images of the fiducial markers in the period T13 immediately before the period T14 to correct the imaged images, for example. When aligning the positions between the imaged images in the period T12 and the imaged images in the period T14, for example, the image processor 7 can use the imaged images in the periods T11 and T13 to calculate the displacement of the fiducial markers therebetween. The image processor 7 then corrects the imaged images in the period T14 by the displacement amount to align the imaged images in the period T14 with the imaged images in the period T12. In other words, the current and previous drift amount in the first period Ta can be calculated by comparing the second period Tb immediately before the first period Ta and the second period Tb further before the first period Ta. By repeating such processing, imaged images can be aligned with those in the first period Ta serving as a reference. The image processor 7 accordingly aligns a plurality of imaged images obtained in the first wavelength period to generate the first image Pa.

The controller 42, in second wavelength period (e.g., period T18), causes the activation light L1 to be emitted (activation light, ON), causes the second excitation light L3 to be emitted (second excitation light, ON), and causes the imager 6 to continuously image fluorescent images from the activated second fluorescent substance in a plurality of frame periods (second imaging processing, ON). The controller 42 adjusts the intensity of the activation light L1 in the second wavelength period according to the type of the second fluorescent substance, for example. The controller 42 causes the auxiliary light L4 to be emitted in each of the frame periods (e.g., period T19) immediately before the period in which imaging is continuously performed in the second wavelength period (e.g., period T20) and causes the imager 6 to image the fluorescent images of the fiducial markers (third imaging processing, ON) . The image processor 7 associates the imaged images of the specimen X in the period T20 with the imaged images of the fiducial markers in the period T19 immediately before the period T20 to correct the imaged images, for example. When aligning the positions between the imaged images in the period T18 and the imaged images in the period T20, for example, the image processor 7 can use the imaged images in the periods T17 and T19 to calculate the displacement of the fiducial markers therebetween. The image processor 7 then corrects the imaged images in the period T20 by the displacement amount to align the imaged images in the period T20 with the imaged images in the period T18. Described above is an example in which imaged images in the period T20 are corrected by the displacement amount of the fiducial markers between the periods T17 and T19. Alternatively, the displacement of the fiducial markers from the period T17 to the period T19 may be used to individually calculate the correction amount to a plurality of imaged images in the period T20. For example, the amount of displacement of the fiducial markers between the periods T17 and T19 may be used to apply linear interpolation to the imaged image in the period T20. For example, the amount of displacement of the fiducial markers between the periods T17 and T19 may be divided by the number of imaged images in the period T20 to determine the correction amount for the first imaged image in the period T20. The divided value may be integrated according to the order of having obtained the imaged images to determine the amount of correction for the following imaged images. Such a configuration enables the imaged images to be corrected with better precision. The image processor 7 accordingly aligns a plurality of imaged images obtained in the second wavelength period to generate the second image Pb. The image processor 7 uses the imaged images in the periods T11 and T17 to calculate the amount of drift occurred between the imaged images serving as the reference of the first image Pa (e.g. , imaged images in the period T12) and the imaged images serving as the positions of the second image Pb (e.g., imaged image in the period T18) and corrects the second image Pb with the correction amount according to the displacement. Such a configuration enables alignment of the second image Pb with the first image Pa and synthesizing of the corrected second image Pb and the first image Pa to obtain the image Pt. The controller 42 causes the display device 44 to display the image Pt, for example.

By the way, the portion of the specimen X displayed in the first image Pa is different from the portion of the specimen X displayed in the second image Pb. In such a case, it is usually difficult to calculate the drift amount by auto-correlation. According to the present embodiment, however, the drift amount can be calculated with precision.

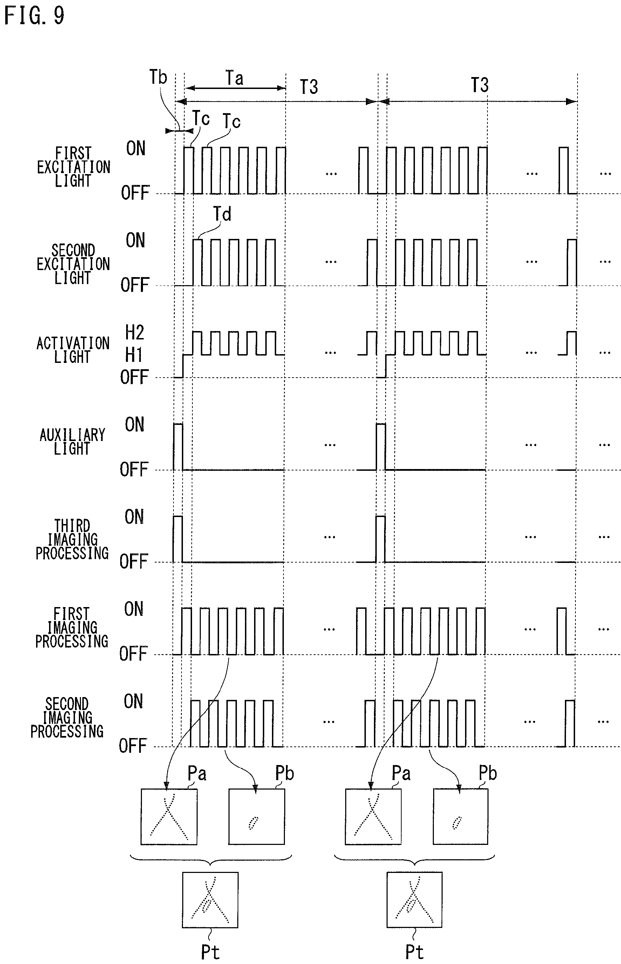

Fig. 9 is a diagram illustrating a sequence of illumination and imaging according to the present embodiment. The controller 42 sets a plurality of first wavelength periods Tc and second wavelength periods Td in the first period Ta. The controller 42, in the first wavelength periods Tc, causes the first excitation light L2 to be emitted (first excitation light, ON), causes the activation light L1 to be emitted (activation light, ON), and causes the imager 6 to image fluorescent images from the specimen X in a single frame period (first imaging processing, ON). The controller 42, in second wavelength periods Td, causes the second excitation light L3 to be emitted (second excitation light, ON), causes the activation light L1 to be emitted (activation light, ON), and causes the imager 6 to image fluorescent images from the specimen X in a single frame period (second imaging processing, ON). The controller 42 provides the first wavelength periods Tc and the second wavelength periods Td alternately, for example. In the same manner as illustrated in Fig. 8, the image processor 7 calculates the drift amount between the current and previous first period Ta by comparing the second period Tb immediately before the first period Ta and the second period Tb further before the first period Ta. By repeating such processing, the image processor 7 corrects the positions of the imaged images in each of the first periods Ta with reference to the imaged images in the first period Ta. The image processor 7 uses at least a part of the imaging result of the imager 6 in the first wavelength periods Tc after correction and at least a part of the imaging result of the imager 6 in the second wavelength periods Td after correction to form at least one image (e.g., super-resolution image) in which bright spots are merged with each other.

The image processor 7 may calculate the average displacement of the entire area of imaged images to perform correction uniformly in the entire area of imaged images. Alternatively, the image processor 7 may calculate displacement of each region of imaged images (e.g., a plurality of pixels) to perform correction for each region. Such a configuration enables correction taking into account an aberration in a case that the aberration increases toward the outer edge of the view of the image-forming optical system 5, for example.

### [Third Embodiment]

The following describes a third embodiment. Described in the present embodiment is an example in which an optical path for fluorescence from a reporter dye and an optical path for light used to detect a position of a specimen are spatially separated. There may be one type of reporter dye, or two or more types of reporter dye. In the present embodiment, the same configurations as those in the embodiments described above are denoted with the same reference numerals and the description thereof are simplified or omitted as appropriate.

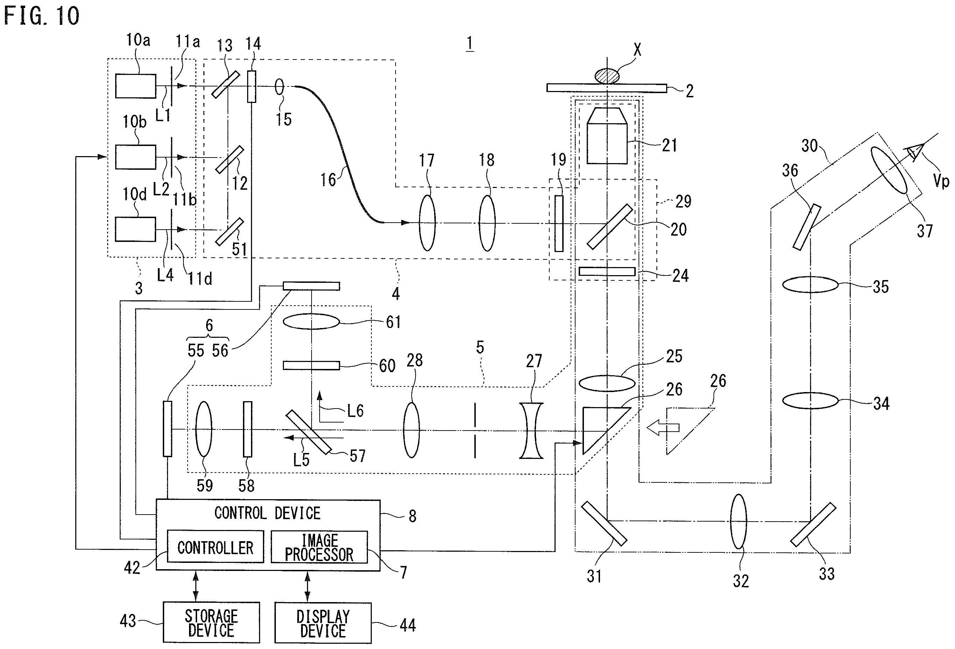

Fig. 10 is a diagram of a microscope device 1 according to the present embodiment. An imager 6 according to the present embodiment includes a first imager 55 and a second imager 56. The first imager 55 and the second imager 56 are cameras provided with imaging elements, for example. A controller 42 causes activation light L1 and first excitation light L2 to be emitted, causes a first imager 55 to perform imaging, causes a specimen X to be irradiated with auxiliary light L4, and causes a second imager 56 to perform imaging. An image processor 7 (refer to Fig. 1) uses an imaging result of the second imager 56 to calculate an amount of displacement (drift amount), uses the amount of displacement to correct an imaging result of the first imager 55, and uses an imaging result after correction to generate a super-resolution image. The controller 42 executes emission of the activation light L1 and the first excitation light L2 in parallel with emission of the auxiliary light L4 and executes imaging of the first imager 55 in parallel with imaging of the second imager 56, for example.

At least a part of the period in which the auxiliary light L4 is emitted may be different from the period in which the activation light L1 and the first excitation light L2 are emitted. At least a part of the period in which the first imager 55 performs imaging may be different from the period in which the second imager 56 performs imaging.

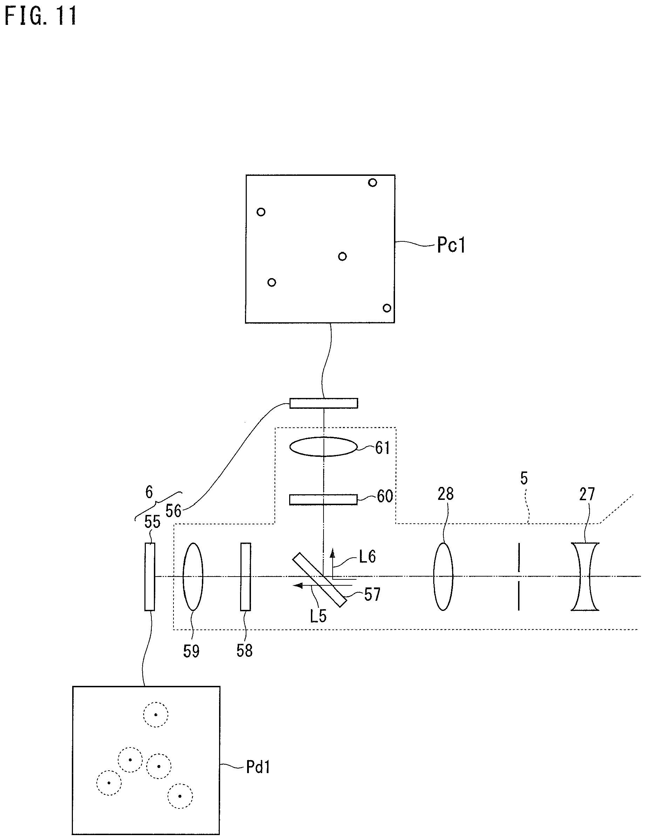

Fig. 11 is a diagram illustrating imagers and a part of an image-forming optical system according to the present embodiment. An image-forming optical system 5 guides, among fluorescence from the specimen X, fluorescence L5 emitted from a fluorescent substance according to the first excitation light L2 to the first imager 55 and guides fluorescence L6 emitted from fiducial markers according to the auxiliary light L4 to the second imager 56. The image-forming optical system 5 is provided with a dichroic mirror 57 on the side to which a lens 28 directs light. The dichroic mirror 57 has a property that transmits the fluorescence L5 and reflects the fluorescence L6. An optical path between the dichroic mirror 57 and the first imager 55 is provided with a filter 58 and a lens 59. The filter 58 blocks the light having a wavelength different from that of the fluorescence L5. An optical path between the dichroic mirror 57 and the second imager 56 is provided with a filter 60 and a lens 61. The filter 60 blocks the light having a wavelength different from that of the fluorescence L6.

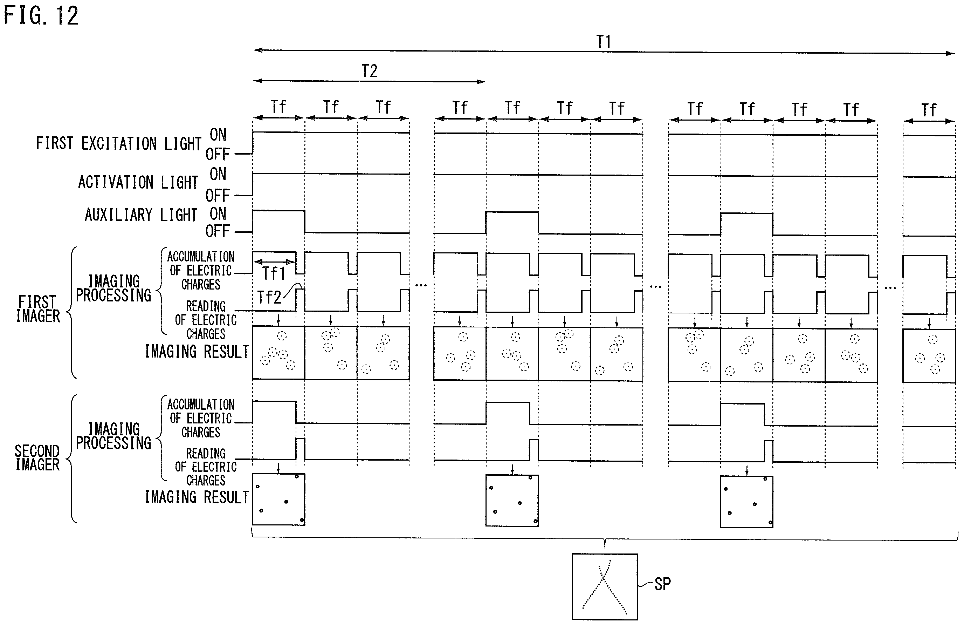

Fig. 12 is a diagram illustrating a sequence of illumination and imaging according to the present embodiment. In Fig. 12, the controller 42 causes the first imager 55 to continuously image images of the fluorescence L5 from the fluorescent substance and causes the second imager 56 to intermittently image images of the fluorescence L6 from the fiducial markers. The controller 42 causes the first excitation light L2 and the activation light L1 to be emitted during the entire period T2, for example. The controller 42 emits the auxiliary light L4 in the first frame period Tf in the period T2 and causes the first imager 55 and the second imager 56 to each perform imaging, for example. As described in Fig. 11, the first imager 55 receives the fluorescence L5 from the fluorescent substance according to the first excitation light L2, and the first imager 55 images the images of the fluorescence L5. The controller 42 causes the first imager 55 to repeat imaging during the period T2. The second imager 56 receives the fluorescence L6 emitted from the fiducial markers according to the auxiliary light L4, and the second imager 56 images the images of the fluorescence L6. As illustrated in Fig. 12, the controller 42, during the period T2, causes the emission of the auxiliary light L4 to stop or causes the intensity thereof to be reduced at the timing when the second imager 56 ends the imaging or at a later timing. The controller 42 repeats the period T2. The image processor 7 uses the imaging result of the second imager 56 to correct the imaging result of the first imager 55 and generates at least one image SP.

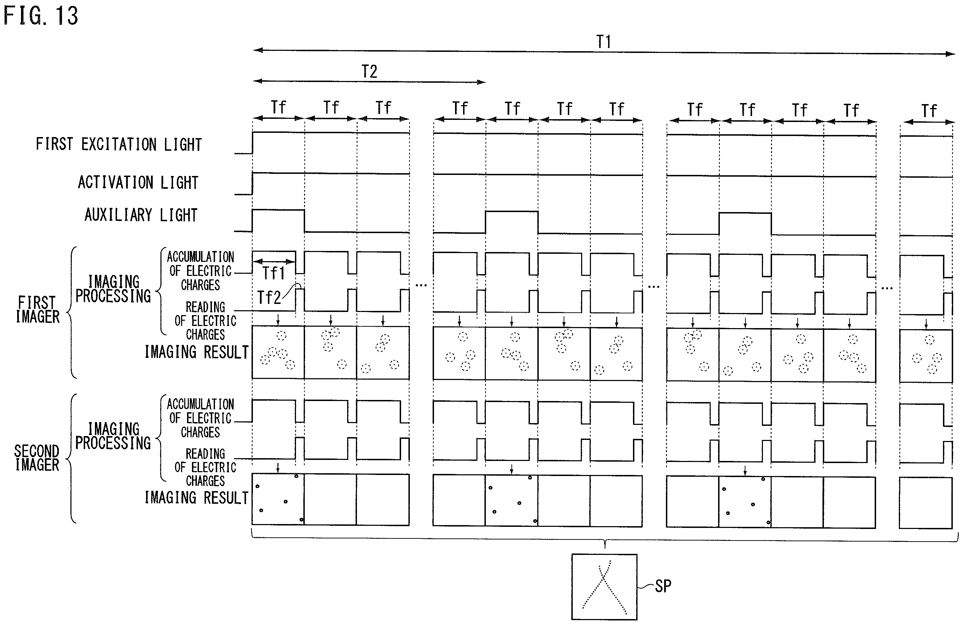

Fig. 13 is a diagram illustrating another example of a sequence of illumination and imaging according to the present embodiment. The controller 42 causes the first excitation light L2 and the activation light L1 to be emitted continuously during the entire period T2, for example. The controller 42 causes the auxiliary light L4 to be emitted intermittently during the period T2. The controller 42 causes the auxiliary light L4 to be emitted in the first frame period Tf in the period T2 and causes the second imager 56 to perform imaging, for example. The controller 42, during the period T2, causes the emission of the auxiliary light L4 to stop or causes the intensity thereof to be reduced at the timing when the second imager 56 ends the imaging or at a later timing. The controller 42 causes the first imager 55 and the second imager 56 to perform imaging continuously during the period T2. The controller 42 causes the second imager 56 to continuously image images of the fluorescence L6 emitted from the fiducial markers. Electric charges are read repeatedly in the period T2, but in the frame period Tf, in which the auxiliary light L4 is not emitted, the fluorescence L6 is hardly emitted from the fiducial markers, so that the image of fluorescence L6 is hardly reflected on the imaged image. The controller 42 repeats the period T2. The image processor 7 uses the imaging result of the second imager 56 to correct the imaging result of the first imager 55 to generate at least one image SP.

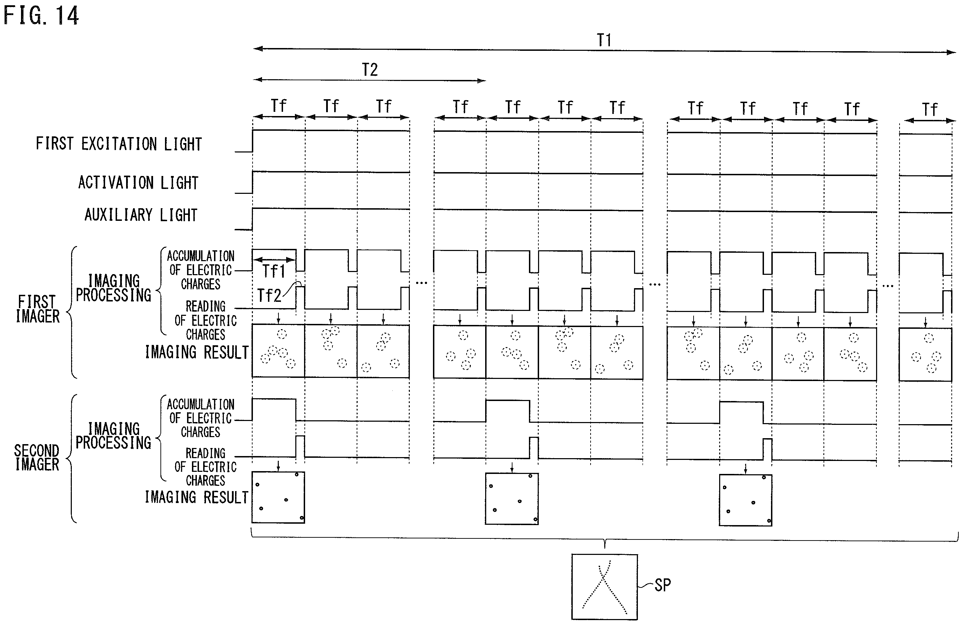

Fig. 14 is a diagram illustrating still another example of a sequence of illumination and imaging according to the present embodiment. The controller 42 causes the first excitation light L2 and the activation light L1 to be emitted continuously during the entire period T2, for example. The controller 42 causes the auxiliary light L4 to be emitted continuously during the period T2. The controller 42 causes the first imager 55 to continuously image images of the fluorescence L5 from the fluorescent substance and causes the second imager 56 to intermittently image images of the fluorescence L6 from the fiducial markers. The controller 42 repeats the period T2. The image processor 7 uses the imaging result of the second imager 56 to correct the imaging result of the first imager 55 to generate at least one image SP.

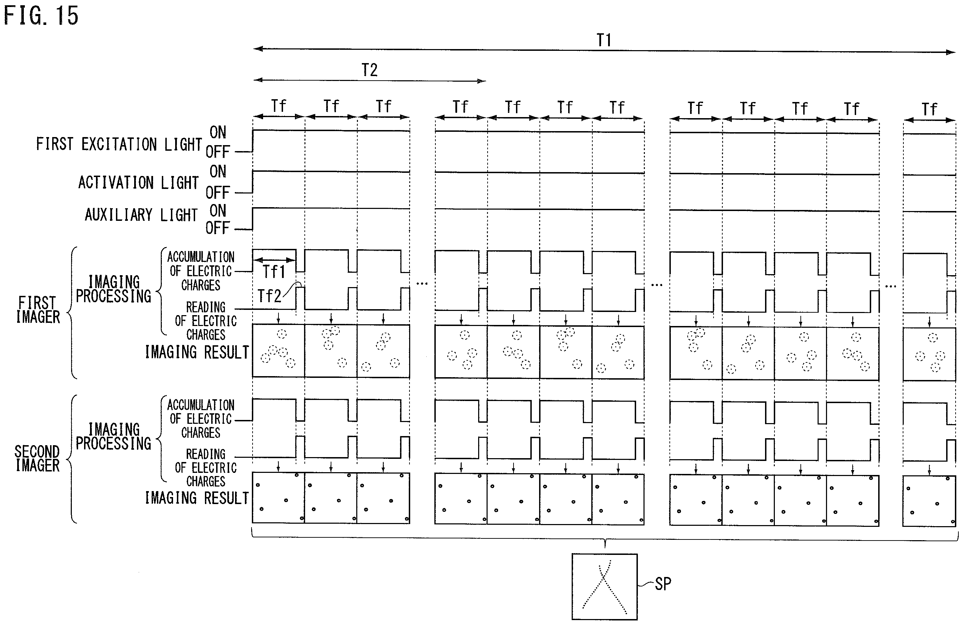

Fig. 15 is a diagram illustrating still another example of a sequence of illumination and imaging according to the present embodiment. The controller 42 causes the first excitation light L2 and the activation light L1 to be emitted continuously during the entire period T2, for example. The controller 42 causes the auxiliary light L4 to be emitted continuously during the period T2. The controller 42 causes the first imager 55 to continuously image images of the fluorescence L5 from the fluorescent substance and causes the second imager 56 to continuously image images of the fluorescence L6 from the fiducial markers. In this case, a plurality of images in which images of the fluorescence L6 of the fiducial markers are imaged in the period T2. The image processor 7 uses at least one imaged image of those imaged by the second imager 56 in the period T2 to correct the imaged images imaged by the first imager 55. The controller 42 repeats the period T2. The image processor 7 uses the imaging result of the second imager 56 to correct the imaging result of the first imager 55 to generate at least one image SP.

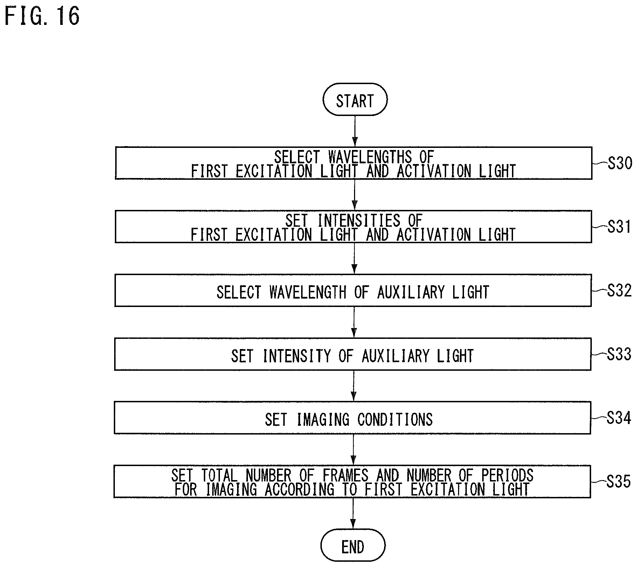

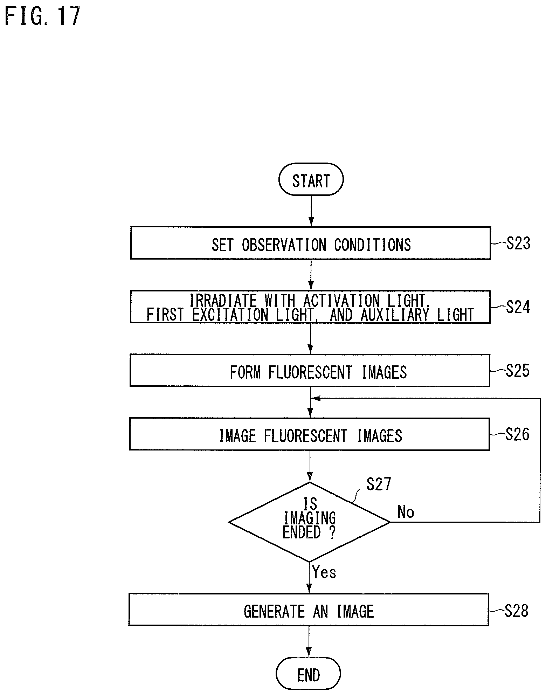

Fig. 16 is a flowchart illustrating an example of processing for setting observation conditions (processing in Step S23 described in Fig. 17) . In Step S30, for example, the user selects wavelengths of the first excitation light L2 and the activation light L1 and the controller 42 sets the wavelengths of the first excitation light L2 and the activation light L1. In Step S31, the controller 42 sets the intensity of the first excitation light L2 and the intensity of the activation light L1. In Step S32, for example, the user selects a wavelength of the auxiliary light L4 and the controller 42 sets the wavelength of the auxiliary light L4. In Step S33, the controller 42 sets the intensity of the auxiliary light L4. In Step S34, the controller 42 sets imaging conditions. For example, the controller 42 adjusts exposure time, a gain, and the like of the first imager 55 according to the type of the fluorescent substance. For example, the controller 42 adjusts exposure time, a gain, and the like of the second imager 56 according to the type of the second fluorescent substance. In Step S35, the controller 42 sets a total number of imaging frames according to the first excitation light L2. The total number of frames corresponds to the number of imaged images required to generate at least one super-resolution image, for example. The total number of frames may be the number of frames required to generate a plurality of images.

Fig. 17 is a flowchart illustrating an observation method according to the present embodiment. An example below describes the sequence illustrated in Fig. 15. In Step S23, the controller 42 sets observation conditions. In Step S24, the controller 42 causes the activation light L1, the first excitation light L2, and the auxiliary light L4 to be emitted. The auxiliary light L4 is emitted in parallel with the activation light L1 and the first excitation light L2, for example. The auxiliary light L4 may be emitted intermittently during a part of the periods in which the activation light L1 and the first excitation light L2 are emitted, for example. In Step S25, the image-forming optical system 5 forms fluorescent images emitted from the specimen X. For example, the image-forming optical system 5 forms images of the fluorescence L5 emitted from the specimen X in the first imager 55 and forms images of the fluorescence L6 emitted from the fiducial markers in the second imager 56. In Step S26, the controller 42 causes the imager 6 to image fluorescent images. For example, the controller 42 causes the first imager 55 to image images of the fluorescence L5 emitted from the specimen X and causes the second imager 56 to image images of the fluorescence L6 emitted from the fiducial markers. In Step S27, the controller 42 determines whether to end imaging. For example, the controller 42 determines to end imaging when the number of imaging (number of frame periods) reaches the predetermined number of imaging (Yes in Step S27), generate an image in Step S28, and end the series of processing. When the controller 42 determines not to end imaging in Step S27 (No in Step S27), it returns to Step S26 and repeats imaging. When the auxiliary light L4 is intermittently emitted as illustrated in Figs. 12 and 13, the controller 42 may set the frame period in which the auxiliary light L4 is emitted in the processing for setting the observation conditions (see Step S23 in Fig. 17) to emit the auxiliary light L4 according to the setting (see Step S24 in Fig. 17), for example. As illustrated in Figs. 12 and 14, when the frame periods for performing imaging according to the auxiliary light L4 are intermittently provided, the frequency of imaging according to the auxiliary light L4 may be set as in Step S7 in Fig. 5 in the process for setting the observation conditions (see Step S23 in Fig. 17) and perform imaging according to the setting, for example.

### [Fourth Embodiment]

The following describes a fourth embodiment. Described in the present embodiment is another example in which an optical path for fluorescence from a reporter dye and an optical path for light used for detecting a position of a specimen are spatially separated. There may be one type of reporter dye, or two or more types of reporter dye. In the present embodiment, the same configurations as those in the above-mentioned embodiments are denoted with the same reference numerals and the description thereof are simplified or omitted as appropriate.

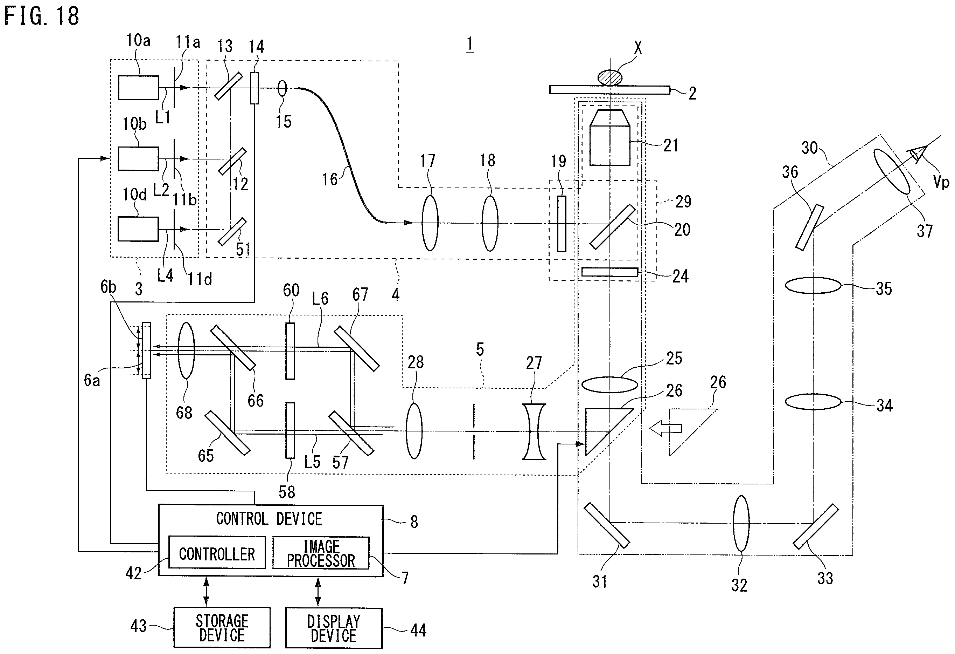

Fig. 18 is a diagram of a microscope device 1 according to the present embodiment. A image-forming optical system 5 forms fluorescent images of an activated fluorescent substance on a first imaging region 6a in an imager 6 and forms fluorescent images of a fiducial markers on a second imaging region 6b in the imager 6. A controller 42 causes the activated fluorescent substance to be irradiated with a first excitation light L2, causes the fiducial markers to be irradiated with the auxiliary light L4, and causes an imager 6 to perform imaging in a plurality of frame periods. A image processor 7 uses an imaging result obtained in the second imaging region 6b to correct at least a part of an imaging result obtained in the first imaging region 6a and uses at least a part of the corrected imaging result to generate an image.

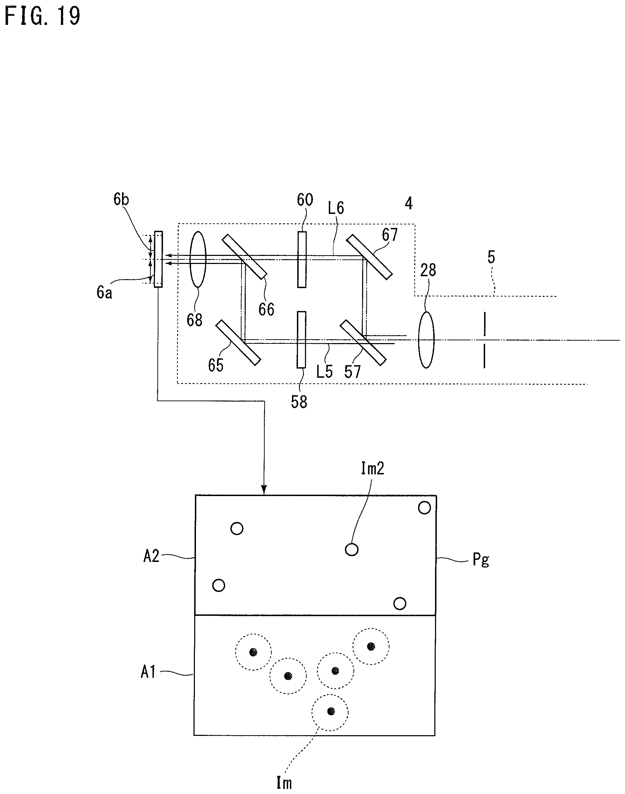

Fig. 19 is a diagram illustrating an imager and a part of an image-forming optical system according to the fourth embodiment. The image-forming optical system 5 guides the fluorescence L5, from the specimen X, that is emitted from a fluorescent substance according to the first excitation light L2 to the first imaging region 6a and guides the fluorescence L6, from the specimen X, that is emitted from fiducial markers according to the auxiliary light L4 to the second imaging region 6b. The image-forming optical system 5 is provided with a dichroic mirror 57 on the side to which the lens 28 directs the light. The dichroic mirror 57 has a property that transmits the fluorescence L5 and reflects the fluorescence L6. After transmitting the dichroic mirror 57, the fluorescence L5 enters a mirror 65 via a filter 58, reflected off the mirror 65, and enters a dichroic mirror 66. After being reflected off the dichroic mirror 57, the fluorescence L6 is reflected off a mirror 67 and enters the dichroic mirror 66 via a filter 60. The dichroic mirror 66 has a property that reflects the fluorescence L5 and transmits the fluorescence L6. The fluorescence L5 reflected off the dichroic mirror 66 and the fluorescence L6 transmitted through the dichroic mirror 66 enter the imager 6 through a lens 68. In the image-forming optical system 5, at least one of the dichroic mirror 57, the mirror 65, the dichroic mirror 66, and the mirror 67 is adjusted in the angle to the optical axis of the image-forming optical system 5 such that optical paths of the fluorescence L5 and the fluorescence L6 that travel toward the imager 6 deviate from each other. The fluorescence L5 reflected off the dichroic mirror 66 enters the first imaging region 6a. The fluorescence L5 reflected off the dichroic mirror 66 does not enter the second imaging region 6b. The fluorescence L6 reflected off the dichroic mirror 66 enters the second imaging region 6b. The fluorescence L6 reflected off the dichroic mirror 66 does not enter the first imaging region 6a.

In Fig. 19, a reference numeral Pg indicates an image obtained by the imager 6. The image Pg includes fluorescent images Im emitted from a fluorescent substance according to the first excitation light L2 in a region A1 corresponding to the first imaging region 6a. The image Pg also includes fluorescent images Im2 emitted from fiducial markers according to the auxiliary light L4 in the second imaging region 6b. The image processor 7 illustrated in Fig. 1 and other figures uses image data obtained in the second imaging region 6b to calculate displacement (drift amount) on the stage 2 and the like of the microscope. The image processor 7 uses the displacement amount to correct image data obtained in the first imaging region 6a to generate an image (e.g., super-resolution image) representing the configuration of the specimen X. In the present embodiment, the sequence of illumination and imaging may be the one illustrated in Fig. 13 or the one illustrated in Fig. 15, for example. In such cases, the first imager is considered being the first imaging region and the second imager is considered being the second imaging region.

### [Fifth Embodiment]

The following describes a fifth embodiment. Described in the present embodiment is an example in which two types of reporter dye are used as markers and setting for an exposure period can be switched. There may be one type of reporter dye, or three or more types of reporter dye. In the present embodiment, the same configurations as those in the embodiments described above are denoted with the same reference numerals and the description thereof are simplified or omitted as appropriate. In the microscope device 1 according to the present embodiment, an imaging element 40 (see Fig. 1) in an imager 6 includes a CMOS image sensor. The microscope device 1 includes a rolling shutter illumination mode (hereinafter referred to as "RS illumination mode") and a global exposure illumination mode (hereinafter referred to as "GE illumination mode") and the two illumination modes can be switched between each other.

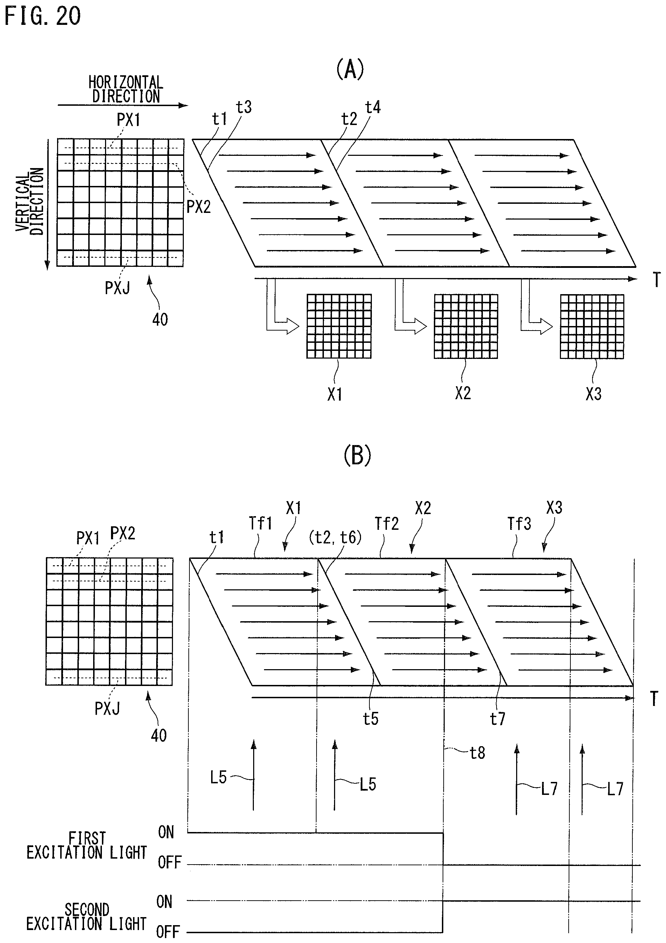

Fig. 20(A) is an illustrative representation of an imaging element 40. The imaging element 40 performs exposure and reads electric charges for each row (line) of pixels arranged in a horizontal direction. For example, a row of a pixel group PX1 at the starting end in a vertical direction starts performing exposure at time t1, ends the exposure at time t2, and reads electric charges therein. A row of a pixel group PX2 following the row of the pixel group PX1 in the vertical scanning direction starts performing exposure at time t3 later than time t1, ends the exposure at time t4, and reads electric charges therein. The imaging element 40 accordingly reads electric charges in a line sequential manner and generate an imaged image X1 using the electric charges read from the rows of the pixel groups PX1 to PXJ. The imaging element 40 generates an imaged image X2, imaged image X3, ... in accordance with the similar operations.

Fig. 20(B) is an illustrative representation of the RS illumination mode. In the RS illumination mode, the specimen X is irradiated with the first excitation light L2 during the entire period between the exposure start time t1 of a row of a pixel group PX1 corresponding to a frame period Tf1 (e.g., period of generating the imaged image X1) and the exposure end time t5 of a row of a pixel group PXJ, during which the imaging element 40 receives the fluorescence L5 emitted from the fluorescent substance according to the first excitation light L2. During the frame period Tf1, the electric charges corresponding to the fluorescence L5 are accumulated over the time from t1 and t5. Accordingly, the imaged image X1 can be obtained with less noise.

Assume that irradiation with the first excitation light L2 is stopped and irradiation with the second excitation light L3 is started at time t8 between time t6 when a row of a pixel group PX1 corresponding to the frame period tf2 (e.g., period of generating the imaged image X2) starts exposure and time t7 when a row of a pixel group PXJ ends the exposure. The imaging element 40 receives fluorescence L7 emitted from the fluorescent substance according to the second excitation light L3 in the periods after time t8. In the frame period Tf2, electric charges resulting from the emission of the fluorescence L5 and electric charges resulting from the emission of the fluorescence L7 coexist, thereby generating an imaged image X2. For the imaged image X2 in the specimen X, it is difficult to distinguish between the configuration corresponding to the fluorescence L5 and the configuration corresponding to the fluorescence L7. Thus, the imaged image X2 is not used to generate a super-resolution image, for example (the frame will be wasted or invalid) . In a frame period Tf3 following the frame period Tf2, the fluorescence L7 with a wavelength is emitted during the entire exposure period so that it is easy to identify the configuration corresponding to the fluorescence L7 and an imaged image X3 can be obtained with less noise. When the imaged image X2 is not used for generating a super-resolution image, the number of times of imaging needed for confirming the total number of frames increases and so does the time needed for performing imaging on the total number of frames. In addition, if the specimen X is irradiated with the excitation light when acquiring the imaged image X2, which is not used for generating a super-resolution image, the specimen X may have a risk of increased damage or discoloration.

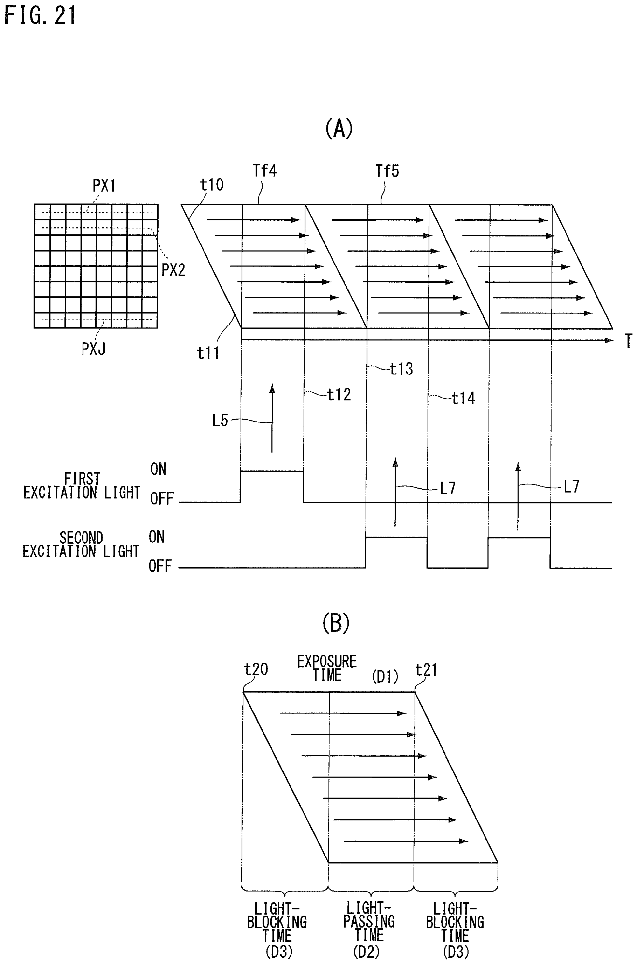

Fig. 21(A) is an illustrative representation of the GE illumination mode. In the GE illumination mode, irradiation with the first excitation light L2 and the second excitation light L3 is stopped from time t10 in which a row of a pixel group PX1 becomes ready for exposure to time t11 in which a row of a pixel group PXJ becomes ready for exposure. The irradiation with the first excitation light L2 starts at time t11 and the irradiation with the first excitation light L2 ends at time t12 in which a row of a pixel group PX1 ends the exposure. In a frame period Tf4 that falls between time t11 and t12, the fluorescence L5 is substantially the only fluorescence emitted during the exposure period so that the imaged image can be obtained so as to easily identify the configuration corresponding to the fluorescence L5. The irradiation with the second excitation light L3 starts at time t13 at which the exposure of the row of the pixel group PXJ becomes ready and the irradiation with the second excitation light L3 stops at time t14 at which the exposure of the row of the pixel group PX1 ends. In a frame period Tf5 that falls between the time t13 and t14, the fluorescence L7 is substantially the only fluorescence emitted during the exposure period so that the imaged image can be obtained so as to easily identify the configuration corresponding to the fluorescence L7. Accordingly, imaged images of both the frame periods Tf4 and Tf5, between which the wavelength of excitation light switches, can be used to generate a super-resolution image in the GE illumination mode, for example, so that the ratio of the frame periods used by the image processor 7 for image processing to the frame periods occurred in the imager 6 (hereinafter referred to as "frame usage rate") can be higher than that in the RS illumination mode.

Fig. 21(B) is an illustrative representation of exposure efficiency in the GE illumination mode. The GE illumination mode can have a higher frame usage rate than that of the RS illumination mode, while the exposure efficiency of the GE illumination mode is lower than that of the RS light mode. The exposure efficiency is a percentage of the length of exposure time to the length of a frame period. In the GE illumination mode, the length of the frame period is from time t20 at which a row of a pixel group becomes ready for exposure to time t21 at which electric charges in the row of the pixel group is read ("exposure time" in Fig. 21(B)). The exposure efficiency η is represented by η = D2 / D1 × 100 (%) where D1 is exposure time and D2 is light-passing time (time of irradiation with the excitation light). In the GE illumination mode, the exposure time D1 is equivalent to the sum of the light-passing time D2 and light-blocking time D3 in which irradiation with the excitation light is stopped, and the relation D1 = D2 + D3 is generally established. When substituting D1 = D2 + D3 for the right side of the expression for η, η = 1 / (1 + D3 / D2) × 100 (%) is established. The light-blocking time D3 is a device parameter dependent on the reading rate of electric charges in the imaging element 40. As D2 increased, D3 / D2 can be decreased and η can be increased.

In the present embodiment, the controller 42 sets the time for irradiation (illumination mode) with the excitation light (e.g., first excitation light L2, second excitation light L3) in the frame periods of the imager 6 based on at least one of the frame usage rate and the exposure efficiency described above. For example, the controller 42 sets the time for irradiating with excitation light by setting the light mode to the RS illumination mode (see Fig. 20(B)) or to the GE illumination mode (see Fig. 21(A)).

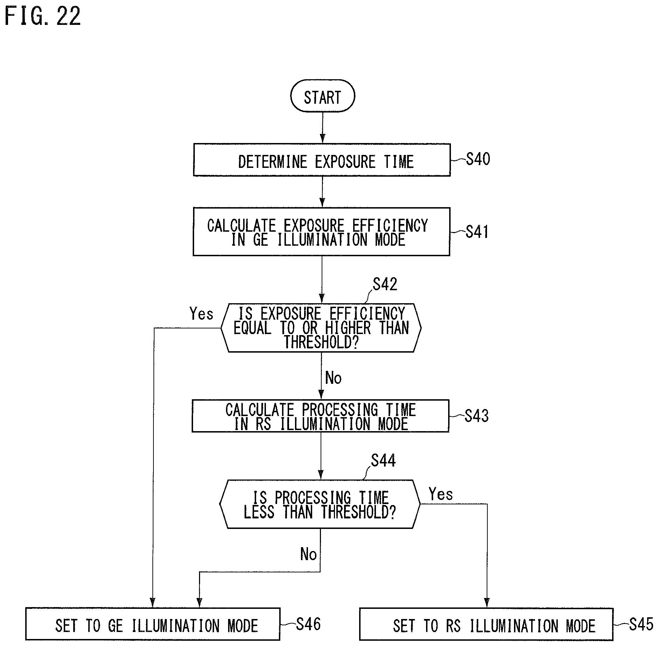

Fig. 22 is a flowchart illustrating an observation method according to the present embodiment. In Step S40, the controller 42 determines the exposure time. For example, the controller 42 determines the exposure time to the value specified by the user or to the predetermined set value. In Step S41, the controller 42 uses the exposure time(D1) determined in Step S40 to calculate the exposure efficiency in the case that the GE illumination mode is adopted. For example, the light-blocking time D3 is a device parameter and D2 can be calculated using D1 and D3 so that η can be obtained. In Step S42, the controller 42 determines whether the exposure efficiency η is equal to or higher than a threshold. The threshold is any set value, for example, 90%. When the controller 42 determines that η is equal to or longer than the threshold (Yes in Step S42), the controller 42 sets the illumination mode to be the GE illumination mode in Step S46. This ensures the exposure efficiency η to be equal to or higher than the threshold and the frame usage rate to be higher than that of the RS illumination mode. In addition, the controller 42 calculates processing time for the case in which the RS illumination mode is adopted in Step S43 when the controller 42 determines the exposure efficiency η is lower than the threshold (No in Step S42). The processing time is a sum of the frame periods not used for image processing and the frame periods used for image processing. The processing time is calculated, for example, from the total number of frames, the frame usage rate described above, and the length of a frame period. In Step S44, the controller 42 determines whether the processing time is shorter than the threshold. When the controller 42 determines that processing time is shorter than the threshold (Yes in Step S44), the controller 42 sets the illumination mode to be the RS illumination mode in Step S45. This ensures the processing time to be shorter than the threshold and imaged images to have less noise. When the controller 42 determines that processing time is equal to or longer than the threshold (No in Step S44), the controller 42 sets the illumination mode to be the GE illumination mode in Step S46. The controller 42 causes, in the GE illumination mode or the RS illumination mode, the activated fluorescent substance to be irradiated with the excitation light and causes the imager 6 to image the fluorescent image from the activated fluorescent substance in a plurality of frame periods. The image processor 7 uses at least a part of the imaging result of the imager 6 to generate an image.

Step S44, instead of determining by the processing time, may alternatively determine whether the number of imaged images not used for image processing (number of wasted frames, number of invalid frames) is shorter than the threshold. In the present embodiment, the controller 42 performs the determination processing according to the processing time (Step S44) after the determination processing according to the exposure efficiency (Step S42). Alternatively, the controller 42 may perform the determination processing of Step S42 after the determination processing of Step S44. For example, the controller 42, following Step S40, may calculate the processing time for the case in which the RS illumination mode is adopted (e.g. , Step S43) and then determine whether the processing time is shorter than the threshold. The controller 42 may alternatively set the RS illumination mode in the case that the processing time is shorter than the threshold and perform the determination processing of Step S42 in the case that the processing time is equal to or longer than the threshold.

The processor 42 does not necessarily perform the determination processing according to the processing time (Step S44) . For example, in Step S42, when the controller 42 determines that the exposure efficiency η is lower than the threshold (No in Step S42), it may set the illumination mode to be the RS illumination mode in Step S45 without executing the processing of Step S43 and Step S44. The controller 42 does not necessarily perform the determination processing according to the exposure efficiency η (Step S42). For example, the controller 42 may perform Step S43 and Step S44, without performing Step S41 and Step S42, to set the light mode to be the GE illumination mode or the RS illumination mode.

### [Sixth Embodiment]

The following describes a sixth embodiment. Described in the present embodiment is another example in which two types of reporter dye are used as markers and setting for an exposure period can be switched. There may be three or more types of reporter dye. In the present embodiment, the same configurations as those in the embodiments described above are denoted with the same reference numerals and the description thereof are simplified or omitted as appropriate.

In the present embodiment, the controller 42 sets periods for irradiation with the excitation light in frame periods of the imager on a basis of a relation between the timing of irradiation with the activation light L1 and the timing of irradiation with the excitation light (first excitation light L2, second excitation light L3). The relation between the timing of irradiation with the activation light L1 and the timing of irradiation with the excitation light (first excitation light L2, second excitation light L3) is determined, for example, by the type of a fluorescent substance.

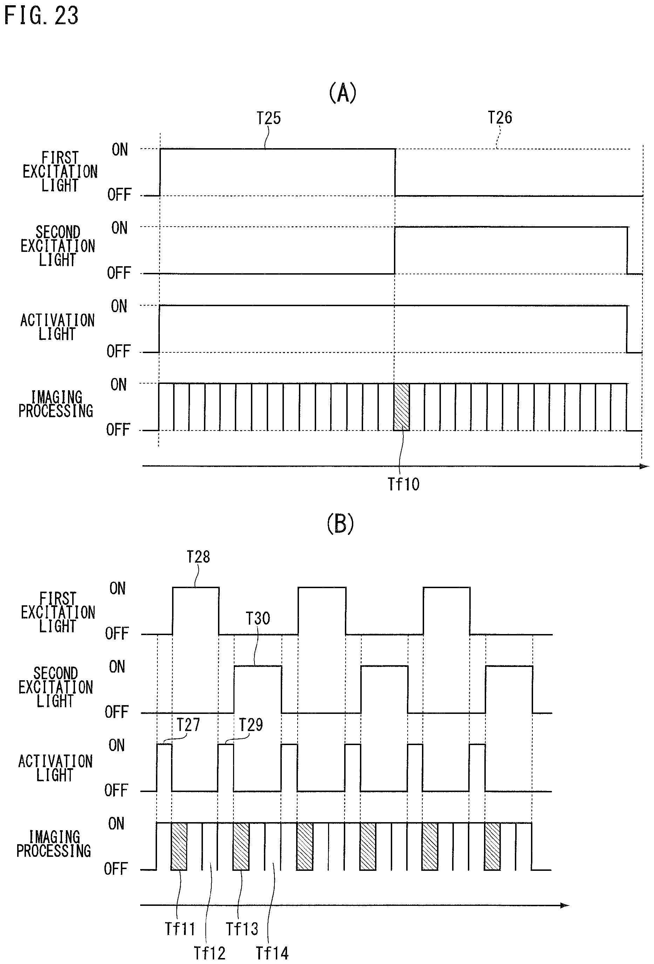

Fig. 23(A) and Fig. 23(B) are diagrams illustrating examples of sequences of illumination and imaging. Fig. 23 (A) is an example in which the fluorescent substance containing reporter dyes and not containing an activator dye is used, for example. In this case, irradiation with the activation light L1 is performed in parallel with irradiation with the first excitation light L2. For example, the controller 42 causes the activation light L1 and the first excitation light L2 to be emitted and a second excitation light L3 not to be emitted in a period T25 to cause the imager 6 to execute imaging processing in a plurality of frame periods. Similarly, the second excitation light L3 is emitted in parallel with the activation light L1. The controller 42 causes the activation light L1 and the second excitation light L3 to be emitted and the first excitation light L2 not to be emitted to cause the imager 6 to execute imaging processing in the frame periods in the period T26. The intensity of the activation light L1 in the period T25 may be different from that in the period T26.

When the RS illumination mode is adopted in Fig. 23(A), an imaging element 40 receives fluorescence of the fluorescent substance according to the first excitation light L2 and fluorescence of the fluorescent substance according to the second excitation light L3 in the first frame period Tf10 in the period T26. Thus, the imaged image in the frame period Tf10 is not used, for example, for image processing. For example, the frame period T26 includes 15 frame periods in Fig. 23(A), which makes the frame usage rate to be 14/15. Accordingly, the increase in processing time can be more likely ignored than the case in which the GE light mode is adopted.

Fig. 23(B) is an example in which the fluorescent substance containing reporter dyes and an activator dye is used, for example. In this case, the emissions of the activation light L1, the first excitation light L2, and the second excitation light L3 are performed while switched with one another according to time. For example, the controller 42 causes the activation light L1 to be emitted in a period T27 and causes the first excitation light L2 to be emitted and the second excitation light L3 not to be emitted in a period T28 to cause the imager 6 to execute imaging processing in a plurality of frame periods. The controller 42 causes the activation light L1 to be emitted in a period T29 and causes the second excitation light L3 to be emitted and the first excitation light L2 not to be emitted in a period T30 to cause the imager 6 to execute imaging processing in the frame periods. The controller 42 repeats the period including the period T28 to T30, for example.

When the RS illumination mode is adopted in Fig. 23(B), the period in which the imaging element 40 receives fluorescence of a fluorescent substance according to the first excitation light L2 from the specimen X is different between the row of the pixel group PX1 and the row of the pixel group PXJ illustrated in Fig. 20 in the first frame period Tf11 in the period T28. Thus, the imaged image in the frame period Tf11 is not used, for example, for image processing in the case that the RS illumination mode is adopted. For example, the frame period T28 includes three frame periods in Fig. 23 (B), which makes the frame usage rate to be 2/3 in the case that the imaged image in the frame period Tf11 is not used. Accordingly, the increase in processing time can be less likely ignored than the case that the GE light mode is adopted. In addition, as the frame periods proceed later in the period T28, the time lapses longer from the irradiation with the activation light L1. Thus, an imaged image is hard to be obtained in some cases. For example, when the imaged image in a last frame period Tf12 is not used for image processing in the period T28, the frame usage rate is further reduced to 1/3. Similarly, in a period T30, when the imaged image in the first frame period Tf13 is not used for image processing, for example, the frame usage rate is 2/3. Furthermore, when the imaged image in the last frame period Tf14 is not used for image processing, the frame usage rate is 1/3. When the GE illumination mode is adopted in Fig. 23(B), the frame usage rate is higher than the case in which the RS illumination mode is adopted, thereby being able to reduce the processing time, for example. In addition, a desired imaged image is more easily obtained in the frame period immediately after irradiation with the activation light L1 (e.g., frame period Tf11, frame period Tf13). Thus, when the GE illumination mode is adopted, image processing can be performed using the desired imaged image.

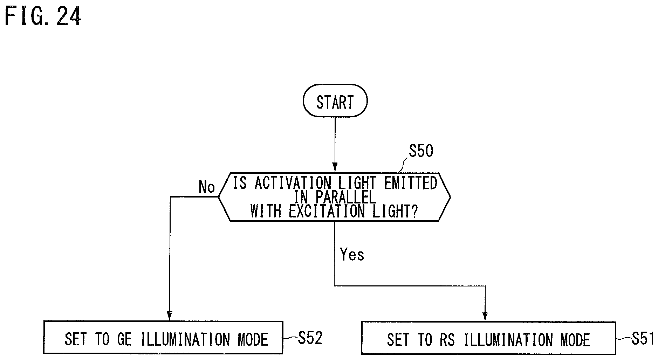

Fig. 24 is a flowchart illustrating an observation method according to the present embodiment. In Step S50, the controller 42 determines whether the activation light L1 is emitted in parallel with the excitation light (first excitation light L2, second excitation light L3). For example, the controller 42 performs the determination processing of Step S50 according to the information input by the user or the setting information stored in the storage device 43 or the like. For example, the user may direct whether the activation light L1 is emitted in parallel with the excitation light and the controller 42 performs the determination processing in Step S50 according to the input information indicating the user direction. Alternatively, the user may input a type of a fluorescent substance and the controller 42 obtains information on the emission timing of the activation light and the excitation light according to the type of the fluorescent substance with reference to the database in which types of fluorescent substances and the timings of irradiation with the activation light and the excitation light are associated with each other. The controller 42 may perform the determination processing in Step S50 according to such information, for example. The controller 42 sets the illumination mode to be the RS illumination mode in Step S51 when the controller 42 determines that the activation light L1 is emitted in parallel with the excitation light (e.g., Fig. 23 (A)) (Yes in Step S50) . The controller 42 sets the illumination mode to be the GE illumination mode in Step S52 when it determines that the activation light L1 is not emitted in parallel with the excitation light (e.g., Fig. 23(B) (No in Step S50). Alternatively, the controller 42 may determine the illumination mode to be the GE illumination mode or the RS illumination mode according to the frequency at which a wavelength of the illumination light (e.g. , activation light L1, first excitation light L2, second excitation light L3) is switched (e.g., frequency). For example, the controller 42 may set the illumination mode to be the GE illumination mode in the case that the frequency at which a wavelength of the illumination light is switched is equal to or longer than the threshold and set the illumination mode to be the RS illumination mode in the case that the frequency at which a wavelength of the illumination light is switched is lower than the threshold.

### [Seventh Embodiment]

The following describes a seventh embodiment. Described in the present embodiment is a mode to generate a three-dimensional super-resolution image. The sequence of illumination may be according to any of the embodiments described above or a combination thereof. In the present embodiment, the same configurations as those in the embodiments described above are denoted with the same reference numerals and the description thereof are simplified or omitted as appropriate.

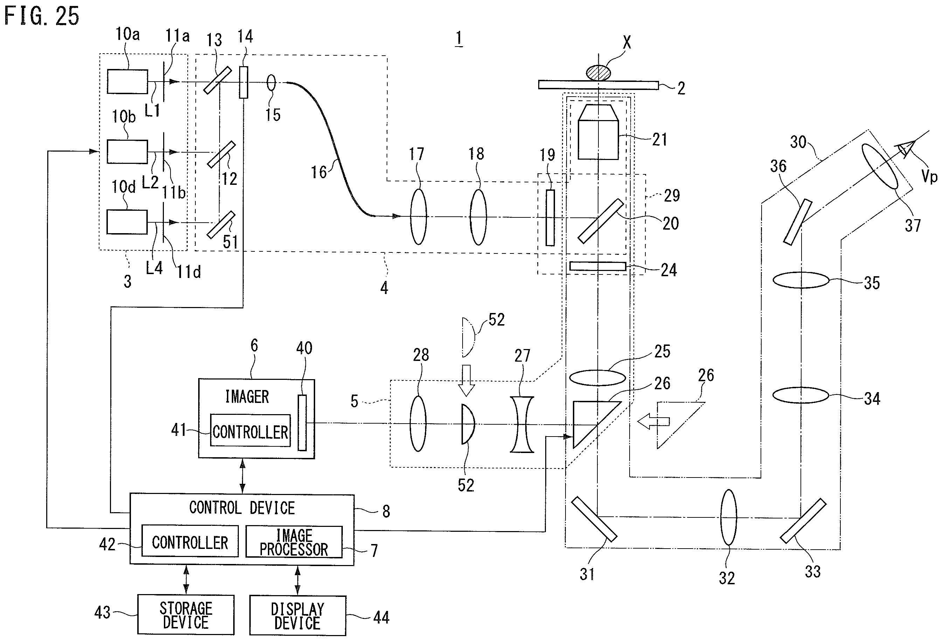

Fig. 25 is a diagram of a microscope device according to the seventh embodiment. The image-forming optical system 5 according to the present embodiment includes an optical member 52. The optical member 52 is a cylindrical lens, for example. The optical member 52 is provided in the optical path between the lens 27 and lens 28 in a detachable manner, for example. The optical member 52 is retracted from the optical path of the image-forming optical system 5 in the mode for generating a two-dimensional super-resolution image, and is inserted into the optical path of the image-forming optical system 5 in the mode for generating a three-dimensional super-resolution image. In the state in which the optical member 52 is inserted into the optical path of the image-forming optical system 5, the fluorescent image from the fluorescent substance is closer to a circular shape as the fluorescent substance is closer to a focus point of the image-forming optical system 5, and the fluorescent image from the fluorescent substance has a higher flatness ratio (ellipticity) as the fluorescent substance is farther from the focus point of the image-forming optical system 5. The directions of the major axis and the minor axis of the ellipse reverse between the cases in which the fluorescent substance is present on the front pin side relative to the focus point of the image-forming optical system 5 and in which the fluorescent substance is present on the rear pin side relative to the focus point of the image-forming optical system 5. The flatness ratio and the directions of the major and the minor axes can indicate the amount and the direction of the deviation from the focus point. The microscope device 1 can calculate the positions of the fluorescent substance in parallel with the optical axis of the image-forming optical system 5 using, for example, the relation between the flatness ratio acquired beforehand and the amount of deviation from the focus point.

The same applies to the case in which images of light from the fiducial markers (e.g. , fluorescence) are imaged described in the fourth embodiment. The displacement (drift amount) of the image-forming optical system 5 in an optical axis direction can also be calculated from the flatness ratio of the images and the directions of the major and the minor axes of the ellipse. The image processor 7 can also perform correction using the displacement (drift amount) of the image-forming optical system 5 in the optical axis direction.

In the embodiment described above, the controller 42 includes a computer system, for example. The controller 42 reads a control program stored in a storage device 43 and executes various types of processing according to the control program. The control program is, for example, a control program causing a computer to execute control of a microscope device that emits activation light for activating a fluorescent substance present in a specimen, excitation light for exciting the activated fluorescent substance, and auxiliary light for exciting a fiducial marker; forms a fluorescent image from the fluorescent substance; images the fluorescent image; performs image processing using a result of the imaging; and controls the imaging. The control of the microscope device includes causing the activated fluorescent substance to be irradiated with the excitation light and causing a fluorescent image from the activated fluorescent substance to be imaged in a plurality of frame periods in a first period, causing the fiducial marker to be irradiated with the auxiliary light and causing a fluorescent image from the fiducial marker to be imaged in a second period, causing irradiation with the excitation light to stop in the second period or causing intensity of the excitation light in the second period to be reduced to be lower than intensity of the excitation light in the first period, and causing irradiation with the auxiliary light in the first period to stop or causing intensity of the auxiliary light in the first period to be reduced to be lower than intensity of the auxiliary light in the second period. The image processing includes correcting at least a part of an imaging result obtained in the first period using an imaging result obtained in the second period and generating one image using at least a part of the corrected imaging result.

The control program mentioned above may be a control program causing a computer to execute control of a microscope device that emits activation light for activating a fluorescent substance present in a specimen, excitation light for exciting the activated fluorescent substance, and auxiliary light for exciting a fiducial marker; forms a fluorescent image from the fluorescent substance by an image-forming optical system; images the fluorescent image by an imager; performs image processing using a result of the imaging; and controls the imaging. The imager includes a first imager and a second imager. The image-forming optical system forms a fluorescent image from the activated fluorescent substance in the first imager and forms a fluorescent image from the fiducial marker in the second imager. The control of the microscope device includes causing the activated fluorescent substance to be irradiated with the excitation light and causing the first imager to image light from the activated fluorescent substance in a plurality of frame periods, and causing the fiducial marker to be irradiated with the auxiliary light and causing the second imager to image a fluorescent image from the fiducial marker. The image processing includes correcting at least a part of an imaging result of the first imager using an imaging result of the second imager and generating one image using at least a part of the corrected imaging result.

The control program mentioned above may be a control program causing a computer to execute control of a microscope device that emits activation light for activating a fluorescent substance present in a specimen, excitation light for exciting the activated fluorescent substance, and auxiliary light for exciting a fiducial marker; forms a fluorescent image from the fluorescent substance by an image-forming optical system; images the fluorescent image by an imager; performs image processing using a result of the imaging; and controls the imaging. The image-forming optical system forms the fluorescent image from the activated fluorescent substance in a first imaging region of the imager and forms a fluorescent image from the fiducial marker in a second imaging region of the imager. The control of the microscope device includes causing the activated fluorescent substance to be irradiated with the excitation light, causing the fiducial marker to be irradiated with the auxiliary light, and causing the imager to perform imaging in a plurality of frame periods. The image processing includes correcting at least a part of an imaging result obtained in the first imaging region using an imaging result obtained in the second imaging region and generating one image using at least a part of the corrected imaging result.

The control program mentioned above may be a control program for controlling a microscope device that emits activation light for activating a fluorescent substance present in a specimen and excitation light for exciting the activated fluorescent substance, forms a fluorescent image from the fluorescent substance; images the fluorescent image by an imager; performs image processing using a result of the imaging; and controls the imaging. The imager includes a CMOS image sensor. The control of the microscope device includes setting a period for irradiation with the excitation light in a frame period of the imager based on at least one of exposure efficiency of the imager, a ratio of a frame period used for the image processing to the imaging result of the imager, and a relation between an irradiation timing of the activation light and an irradiation timing of the excitation light and causing the activated fluorescent substance to be irradiated with the excitation light, and causing the imager to image a fluorescent image from the activated fluorescent substance in a plurality of frame periods. The image processing includes generating one image using at least a part of the result of the imaging.

Each of the control programs mentioned above may be stored and provided in a computer-readable storage medium.

The scope of the present invention defined by the appended claims and is not to be considered limited to the aspects described according to the above-mentioned embodiments, for example. One or more of the requirements described in the above-mentioned embodiments and the like may be omitted. Note that requirements described in the above-mentioned embodiments may be appropriately combined with one another.

### [Description of Reference Signs]

- 1: Microscope device
- 4: Illumination optical system
- 5: Image-forming optical system
- 6: Imager
- 6a: First imaging region
- 6b: Second imaging region
- 7: Image processor
- 41: Controller
- 42: Controller
- 55: First imager
- 56: Second imager

## Claims

1. A microscope device (1), comprising:
an illumination optical system (4) arranged to emit activation light for activating a fluorescent substance present in a specimen, excitation light for exciting the activated fluorescent substance, and auxiliary light for exciting a fiducial marker;
an image-forming optical system (5) arranged to form a fluorescent image from the fluorescent substance;
an imager (6) arranged to image an image formed by the image-forming optical system;
an image processor (7) arranged to perform image processing using an imaging result of the imager; and
a controller (42) arranged to control the imager,
the controller arranged to:
cause the activated fluorescent substance to be irradiated with the excitation light and causing the imager to image a fluorescent image from the activated fluorescent substance in a plurality of frame periods in a first period,
cause the fiducial marker to be irradiated with the auxiliary light and causing the imager to image a fluorescent image from the fiducial marker in a second period,
cause irradiation with the excitation light in the second period to stop or causing intensity of the excitation light in the second period to be reduced to be lower than intensity of the excitation light in the first period, and
cause irradiation with the auxiliary light in the first period to stop or causing intensity of the auxiliary light in the first period to be reduced to be lower than intensity of the auxiliary light in the second period, in order to detect the position of the fiducial markers with higher precision,
the image processor arranged to correct at least a part of an imaging result obtained in the first period using an imaging result obtained in the second period and generate one image using at least a part of the corrected imaging result,
wherein a wavelength of the excitation light and a wavelength of the auxiliary light are different from each other.

2. The microscope device according to claim 1, wherein the auxiliary light is weaker than the excitation light.

3. The microscope device according to claims 1 or 2, wherein the controller is arranged to
set a first wavelength period and a second wavelength period in the first period,
cause the excitation light having a first wavelength to be emitted and causes the imager to image a fluorescent image from the activated fluorescent substance in a plurality of frame periods in the first wavelength period, and
cause the excitation light having a second wavelength to be emitted and causes the imager to image a fluorescent image from the activated fluorescent substance in a plurality of frame periods in a second wavelength period, and
the image processor is arranged to form at least one image using at least a part of the imaging result of the imager in the first wavelength period and at least a part of the imaging result of the imager in the second wavelength period.

4. The microscope device according to any one of claims 1 or 2, wherein
the controller is arranged to
set a first wavelength period and a second wavelength period in the first period,
cause the excitation light having a first wavelength to be emitted and causes the imager to image light from the specimen in one frame period in the first wavelength period, and
cause the excitation light having a second wavelength to be emitted and cause the imager to image light from the specimen in one frame period in the second wavelength period, and
the image processor is arranged to form at least one image using at least a part of the imaging result of the imager in a plurality of the first wavelength periods and at least a part of the imaging result of the imager in a plurality of the second wavelength periods.

5. The microscope device according to claim 4, wherein the controller is arranged to set the first wavelength period and the second wavelength period alternatively.

6. The microscope device according to any one of claims 3 to 5, wherein the image processor is arranged to generate one image using at least a part of the imaging result of the imager in the first wavelength period and at least a part of the imaging result of the imager in the second wavelength period.

7. The microscope device according to any one of claims 3 to 5, wherein the image processor is arranged to generate a first image using at least a part of the imaging result of the imager in the first wavelength period and generate a second image using at least a part of the imaging result of the imager in the second wavelength period.

8. The microscope device according to claim 7, wherein the image processor is arranged to correct a positional relation between the first image and the second image using at least a part of the imaging result of the imager in the first period.

9. The microscope device according to claim 7 or 8, wherein the image processor is arranged to generate one image using the first image and the second image.

10. An observation method, comprising:
emitting activation light for activating a fluorescent substance present in a specimen, excitation light for exciting the activated fluorescent substance, and auxiliary light for exciting a fiducial marker;
forming a fluorescent image from the fluorescent substance;
imaging the fluorescent image;
performing image processing using a result of the imaging; and
controlling the imaging,
the controlling comprising:
causing the activated fluorescent substance to be irradiated with the excitation light and causing a fluorescent image from the activated fluorescent substance to be imaged in a plurality of frame periods in a first period,
causing the fiducial marker to be irradiated with the auxiliary light and causing a fluorescent image from the fiducial marker to be imaged in a second period, in order to detect the position of the fiducial markers with higher precision,
causing irradiation with the excitation light to stop in the second period or causing intensity of the excitation light in the second period to be reduced to be lower than intensity of the excitation light in the first period, and
causing irradiation with the auxiliary light in the first period to stop or causing intensity of the auxiliary light in the first period to be reduced to be lower than intensity of the auxiliary light in the second period,
the image processing comprising correcting at least a part of an imaging result obtained in the first period using an imaging result obtained in the second period and generating one image using at least a part of the corrected imaging result,
wherein a wavelength of the excitation light and a wavelength of the auxiliary light are different from each other

11. A control program causing a computer to execute control of a microscope device (1) that emits activation light for activating a fluorescent substance present in a specimen, excitation light for exciting the activated fluorescent substance, and auxiliary light for exciting a fiducial marker; forms a fluorescent image from the fluorescent substance; images the fluorescent image; performs image processing using a result of the imaging; and controls the imaging,
the control of the microscope device comprising:
causing the activated fluorescent substance to be irradiated with the excitation light and causing a fluorescent image from the activated fluorescent substance to be imaged in a plurality of frame periods in a first period,
causing the fiducial marker to be irradiated with the auxiliary light and causing a fluorescent image from the fiducial marker to be imaged in a second period, in order to detect the position of the fiducial markers with higher precision,
causing irradiation with the excitation light to stop in the second period or causing intensity of the excitation light in the second period to be reduced to be lower than intensity of the excitation light in the first period, and
causing irradiation with the auxiliary light in the first period to stop or causing intensity of the auxiliary light in the first period to be reduced to be lower than intensity of the auxiliary light in the second period, the image processing comprising correcting at least a part of an imaging result obtained in the first period using an imaging result obtained in the second period and generating one image using at least a part of the corrected imaging result,
wherein a wavelength of the excitation light and a wavelength of the auxiliary light are different from each other.

## Patentansprüche

1. Mikroskopische Vorrichtung (1), umfassend:
ein optisches Beleuchtungssystem (4), das so ausgelegt ist, dass es Aktivierungslicht zum Aktivieren einer in einer Probe vorhandenen fluoreszierenden Substanz, Anregungslicht zum Anregen der aktivierten fluoreszierenden Substanz und Hilfslicht zum Anregen eines Referenzmarkers aussendet;
ein bildgebendes optisches System (5), das so ausgelegt ist, dass es ein Fluoreszenzbild von der fluoreszierenden Substanz erzeugt;
einen Bildgeber (6), der so ausgelegt ist, dass er ein von dem bildgebenden optischen System erzeugtes Bild abbildet;
einen Bildprozessor (7), der so ausgelegt ist, dass er eine Bildverarbeitung unter Verwendung eines Abbildungsergebnisses des Bildgebers durchführt; und
eine Steuerung (42) zur Steuerung des Bildgebers,
die Steuerung ausgelegt ist:
zu bewirken, dass die aktivierte fluoreszierende Substanz mit dem Anregungslicht bestrahlt wird, und zu bewirken, dass der Bildgeber ein Fluoreszenzbild von der aktivierten fluoreszierenden Substanz in einer Vielzahl von Rahmenperioden in einer ersten Periode abbildet,
zu bewirken, dass der Referenzmarker mit dem Hilfslicht bestrahlt wird, und zu bewirken, dass der Bildgeber in einer zweiten Periode ein Fluoreszenzbild von dem Referenzmarker abbildet,
zu bewirken, dass die Bestrahlung mit dem Anregungslicht in der zweiten Periode endet, oder die Intensität des Anregungslichts in der zweiten Periode auf eine geringere Intensität als die des Anregungslichts in der ersten Periode zu reduzieren, und
zu bewirken, dass die Bestrahlung mit dem Hilfslicht in der ersten Periode zu endet, oder die Intensität des Hilfslichts in der ersten Periode so zu verringern, dass sie geringer ist als die Intensität des Hilfslichts in der zweiten Periode, um die Position des Referenzmarkers mit hööherer Präzision zu detektieren,
wobei der Bildprozessor so ausgelegt ist, dass er zumindest einen Teil eines in der ersten Periode erhaltenen Abbildungsergebnisses unter Verwendung eines in der zweiten Periode erhaltenen Abbildungsergebnisses korrigiert und ein Bild unter Verwendung zumindest eines Teils des korrigierten Abbildungsergebnisses erzeugt,
wobei eine Wellenlänge des Anregungslichts und eine Wellenlänge des Hilfslichts voneinander verschieden sind.

2. Mikroskopische Vorrichtung gemäß Anspruch 1, wobei das Hilfslicht schwächer ist als das Anregungslicht.

3. Mikroskopische Vorrichtung gemäß Anspruch 1 oder 2, wobei
Die Steuerung ausgelegt ist,
eine erste Wellenlängenperiode und eine zweite Wellenlängenperiode in der ersten Periode einzustellen,
zu bewirken, dass das Anregungslicht mit einer ersten Wellenlänge emittiert wird, und zu bewirken, dass der Bildgeber ein Fluoreszenzbild von der aktivierten fluoreszierenden Substanz in einer Vielzahl von Rahmenperioden in der ersten Wellenlängenperiode abbildet, und
zu bewirken, dass das Anregungslicht mit einer zweiten Wellenlänge emittiert wird, und zu bewirken, dass der Bildgeber ein Fluoreszenzbild von der aktivierten fluoreszierenden Substanz in einer Vielzahl von Rahmenperioden in einer zweiten Wellenlängenperiode abbildet, und
der Bildprozessor ausgelegt ist, mindestens ein Bild unter Verwendung mindestens eines Teils des Abbildungsergebnisses des Bildgebers in der ersten Wellenlängenperiode und mindestens eines Teils des Abbildungsergebnisses des Bildgebers in der zweiten Wellenlängenperiode zu erzeugen.

4. Mikroskopische Vorrichtung gemäß einem der Ansprüche 1 oder 2, wobei
die Steuerung ausgelegt ist
eine erste Wellenlängenperiode und eine zweite Wellenlängenperiode in der ersten Periode einzustellen,
zu bewirken, dass das Anregungslicht mit einer ersten Wellenlänge emittiert wird, und zu bewirken, dass der Bildgeber Licht von der Probe in einer Rahmenperiode in der ersten Wellenlängenperiode abbildet, und
zu bewirken, das Anregungslicht mit einer zweiten Wellenlänge zu emittieren und zu bewirken, dass der Bildgeber Licht von der Probe in einer Rahmenperiode in der zweiten Wellenlängenperiode abbildet, und
der Bildprozessor so ausgelegt ist, dass er mindestens ein Bild unter Verwendung mindestens eines Teils des Bildergebungsergebnisses des Bildgebers in einer Vielzahl der ersten Wellenlängenperioden und mindestens eines Teils des Bildergebungsergebnisses des Bildgebers in einer Vielzahl der zweiten Wellenlängenperioden erzeugt.

5. Mikroskopische Vorrichtung gemäß Anspruch 4, wobei die Steuerung ausgelegt ist, die erste Wellenlängenperiode und die zweite Wellenlängenperiode abwechselnd einzustellen.

6. Mikroskopische Vorrichtung gemäß einem der Ansprüche 3 bis 5, wobei der Bildprozessor ausgelegt ist, ein Bild unter Verwendung mindestens eines Teils des Abbildungsergebnisses des Bildgebers in der ersten Wellenlängenperiode und mindestens eines Teils des Abbildungsergebnisses des Bildgebers in der zweiten Wellenlängenperiode zu erzeugen.

7. Mikroskopische Vorrichtung gemäß einem der Ansprüche 3 bis 5, wobei der Bildprozessor ausgelegt ist, ein erstes Bild unter Verwendung mindestens eines Teils des Abbildungsergebnisses des Bildgebers in der ersten Wellenlängenperiode erzeugt und ein zweites Bild unter Verwendung mindestens eines Teils des Abbildungsergebnisses des Bildgebers in der zweiten Wellenlängenperiode zu erzeugen.

8. Mikroskopische Vorrichtung gemäß Anspruch 7, wobei der Bildprozessor ausgelegt ist, eine Positionsbeziehung zwischen dem ersten Bild und dem zweiten Bild unter Verwendung mindestens eines Teils des Abbildungsergebnisses des Bildgebers in der ersten Periode zu korrigieren.

9. Mikroskopische Vorrichtung gemäß Anspruch 7 oder 8, wobei der Bildprozessor ausgelegt ist, ein Bild unter Verwendung des ersten Bildes und des zweiten Bildes zu erzeugen.

10. Beobachtungsverfahren, umfassend:
Emittieren von Aktivierungslicht zur Aktivierung einer in einer Probe vorhandenen fluoreszierenden Substanz, Anregungslicht zur Anregung der aktivierten fluoreszierenden Substanz, und Hilfslicht zur Anregung eines Referenzmarkers;
Erstellen eines Fluoreszenzbildes aus der fluoreszierenden Substanz;
Bildgeben des Fluoreszenzbildes;
Durchführen einer Bildverarbeitung unter Verwendung eines Ergebnisses der Bildgebung; und
Steuern der Bildgebung,
wobei das Steuern umfasst:
Bewirken, dass die aktivierte fluoreszierende Substanz mit dem Anregungslicht bestrahlt wird, und Bewirken, dass ein Fluoreszenzbild von der aktivierten fluoreszierenden Substanz in einer Vielzahl von Rahmenperioden in einer ersten Periode abgebildet wird,
Bewirken, dass der Referenzmarker mit dem Hilfslicht bestrahlt wird, und Bewirken, dass ein Fluoreszenzbild von des Referenzmarkers in einer zweiten Periode abgebildet wird, um die Position des Referenzmarkers mit höherer Präzision zu detektieren,
Bewirken, dass die Bestrahlung mit dem Anregungslicht in der zweiten Periode aufhört oder Bewirken, dass die Intensität des Anregungslichts in der zweiten Periode verringert wird, um niedriger als die Intensität des Anregungslichts in der ersten Periode zu sein, und
Bewirken, dass die Bestrahlung mit dem Hilfslicht in der ersten Periode endet, oder Bewirken, dass die Intensität des Hilfslichts in der ersten Periode verringert wird, um niedriger als die Intensität des Hilfslichts in der zweiten Periode zu sein,
wobei die Bildverarbeitung das Korrigieren mindestens eines Teils eines in der ersten Periode erhaltenen Abbildungsergebnisses unter Verwendung eines in der zweiten Periode erhaltenen Abbildungsergebnisses und das Erzeugen eines Bildes unter Verwendung mindestens eines Teils des korrigierten Abbildungsergebnisses umfasst,
wobei eine Wellenlänge des Anregungslichts und eine Wellenlänge des Hilfslichts voneinander verschieden sind.

11. Steuerprogramm, das einen Computer veranlasst, die Steuerung einer mikroskopischen Vorrichtung (1) auszuführen, die Aktivierungslicht zum Aktivieren einer fluoreszierenden Substanz, die in einer Probe vorhanden ist, Anregungslicht zum Anregen der aktivierten fluoreszierenden Substanz und Hilfslicht zum Anregen eines Referenzmarkers emittiert; ein Fluoreszenzbild aus der fluoreszierenden Substanz erzeugt; das Fluoreszenzbild abbildet; eine Bildverarbeitung unter Verwendung eines Ergebnisses der Bildgebung durchführt; und die Bildgebung steuert,
wobei die Steuerung der mikroskopischen Vorrichtung umfasst:
Bewirken, dass die aktivierte fluoreszierende Substanz mit dem Anregungslicht bestrahlt wird, und Bewirken, dass ein Fluoreszenzbild von der aktivierten fluoreszierenden Substanz in einer Vielzahl von Rahmenperioden in einer ersten Periode abgebildet wird,
Bewirken, dass der Referenzmarker mit dem Hilfslicht bestrahlt wird, und Bewirken, dass ein Fluoreszenzbild von dem Referenzmarker in einer zweiten Periode abgebildet wird, um die Position des Referenzmarkers mit höherer Präzision zu detektieren,
Bewirken, dass die Bestrahlung mit dem Anregungslicht in der zweiten Periode endet, oder Bewirken, dass die Intensität des Anregungslichts in der zweiten Periode verringert wird, so dass sie niedriger ist als die Intensität des Anregungslichts in der ersten Periode, und
Bewirken, dass die Bestrahlung mit dem Hilfslicht in der ersten Periode endet, oder Bewirken, dass die Intensität des Hilfslichts in der ersten Periode verringert wird, so dass sie geringer ist als die Intensität des Hilfslichts in der zweiten Periode, wobei die Bildverarbeitung das Korrigieren mindestens eines Teils eines in der ersten Periode erhaltenen Abbildungsergebnisses unter Verwendung eines in der zweiten Periode erhaltenen Abbildungsergebnisses und das Erzeugen eines Bildes unter Verwendung mindestens eines Teils des korrigierten Abbildungsergebnisses umfasst,
wobei eine Wellenlänge des Anregungslichts und eine Wellenlänge des Hilfslichts voneinander verschieden sind.

## Revendications

1. Dispositif de microscope (1), comprenant :
un système optique d'éclairage (4) agencé pour émettre une lumière d'activation pour activer une substance fluorescente présente dans un échantillon, une lumière d'excitation pour exciter la substance fluorescente activée, et une lumière auxiliaire pour exciter un repère de référence ;
un système optique (5) de formation d'image agencé pour former une image fluorescente à partir de la substance fluorescente ;
un élément d'imagerie (6) agencé pour imager une image formée par le système optique de formation d'image ;
un processeur d'image (7) agencé pour mettre en oeuvre un traitement d'image à l'aide d'un résultat d'imagerie de l'élément d'imagerie ; et
un dispositif de commande (42) agencé pour commander l'élément d'imagerie,
le dispositif de commande agencé pour :
amener la substance fluorescente activée à être irradiée avec la lumière d'excitation et amener l'élément d'imagerie à imager une image fluorescente à partir de la substance fluorescente activée dans une pluralité de périodes de trame dans une première période,
amener le repère de référence à être irradié avec la lumière auxiliaire et amener l'élément d'imagerie à imager une image fluorescente à partir du repère de référence dans une deuxième période,
provoquer l'arrêt de l'irradiation avec la lumière d'excitation dans la deuxième période ou provoquer la réduction de l'intensité de la lumière d'excitation dans la deuxième période pour qu'elle soit inférieure à l'intensité de la lumière d'excitation dans la première période, et
provoquer l'arrêt de l'irradiation avec la lumière auxiliaire dans la première période ou provoquer la réduction de l'intensité de la lumière auxiliaire dans la première période pour qu'elle soit inférieure à l'intensité de la lumière auxiliaire dans la deuxième période, afin de détecter la position des repères de référence avec une précision plus élevée,
le processeur d'image agencé pour corriger au moins une partie d'un résultat d'imagerie obtenu dans la première période à l'aide d'un résultat d'imagerie obtenu dans la deuxième période et générer une image à l'aide d'au moins une partie du résultat d'imagerie corrigé,
dans lequel une longueur d'onde de la lumière d'excitation et une longueur d'onde de la lumière auxiliaire sont différentes l'une de l'autre.

2. Dispositif de microscope selon la revendication 1, dans lequel la lumière auxiliaire est plus faible que la lumière d'excitation.

3. Dispositif de microscope selon la revendication 1 ou la revendication 2, dans lequel le dispositif de commande est agencé pour
régler une première période de longueur d'onde et une deuxième période de longueur d'onde dans la première période,
provoquer l'émission de la lumière d'excitation présentant une première longueur d'onde et amener l'élément d'imagerie à imager une image fluorescente à partir de la substance fluorescente activée dans une pluralité de périodes de trame dans la première période de longueur d'onde, et
provoquer l'émission de la lumière d'excitation présentant une deuxième longueur d'onde et amener l'élément d'imagerie à imager une image fluorescente à partir de la substance fluorescente activée dans une pluralité de périodes de trame dans une deuxième période de longueur d'onde, et
le processeur d'image est agencé pour former au moins une image à l'aide d'au moins une partie du résultat d'imagerie de l'élément d'imagerie dans la première période de longueur d'onde et d'au moins une partie du résultat d'imagerie de l'élément d'imagerie dans la deuxième période de longueur d'onde.

4. Dispositif de microscope selon l'une quelconque des revendications 1 ou 2, dans lequel
le dispositif de commande est agencé pour
régler une première période de longueur d'onde et une deuxième période de longueur d'onde dans la première période,
provoquer l'émission de la lumière d'excitation présentant une première longueur d'onde et amener l'élément d'imagerie à imager une lumière provenant de l'échantillon dans une période de trame dans la première période de longueur d'onde, et
provoquer l'émission de la lumière d'excitation présentant une deuxième longueur d'onde et amener l'élément d'imagerie à imager une lumière provenant de l'échantillon dans une période de trame dans la deuxième période de longueur d'onde, et le processeur d'image est agencé pour former au moins une image à l'aide d'au moins une partie du résultat d'imagerie de l'élément d'imagerie dans une pluralité des premières périodes de longueur d'onde et d'au moins une partie du résultat d'imagerie de l'élément d'imagerie dans une pluralité des deuxièmes périodes de longueur d'onde.

5. Dispositif de microscope selon la revendication 4, dans lequel le dispositif de commande est agencé pour régler la première période de longueur d'onde et la deuxième période de longueur d'onde en alternance.

6. Dispositif de microscope selon l'une quelconque des revendications 3 à 5, dans lequel le processeur d'image est agencé pour générer une image à l'aide d'au moins une partie du résultat d'imagerie de l'élément d'imagerie dans la première période de longueur d'onde et d'au moins une partie du résultat d'imagerie de l'élément d'imagerie dans la deuxième période de longueur d'onde.

7. Dispositif de microscope selon l'une quelconque des revendications 3 à 5, dans lequel le processeur d'image est agencé pour générer une première image à l'aide d'au moins une partie du résultat d'imagerie de l'élément d'imagerie dans la première période de longueur d'onde et générer une deuxième image à l'aide d'au moins une partie du résultat d'imagerie de l'élément d'imagerie dans la deuxième période de longueur d'onde.

8. Dispositif de microscope selon la revendication 7, dans lequel le processeur d'image est agencé pour corriger une relation positionnelle entre la première image et la deuxième image à l'aide d'au moins une partie du résultat d'imagerie de l'élément d'imagerie dans la première période.

9. Dispositif de microscope selon la revendication 7 ou la revendication 8, dans lequel le processeur d'image est agencé pour générer une image à l'aide de la première image et de la deuxième image.

10. Procédé d'observation, comprenant :
une émission d'une lumière d'activation pour activer une substance fluorescente présente dans un échantillon, une lumière d'excitation pour exciter la substance fluorescente activée, et une lumière auxiliaire pour exciter un repère de référence ;
une formation d'une image fluorescente à partir de la substance fluorescente ;
une imagerie de l'image fluorescente ;
une mise en oeuvre d'un traitement d'image à l'aide d'un résultat de l'imagerie ; et
une commande de l'imagerie,
la commande comprenant :
le fait d'amener la substance fluorescente activée à être irradiée avec la lumière d'excitation et le fait d'amener une image fluorescente à partir de la substance fluorescente activée à être imagée dans une pluralité de périodes de trame dans une première période,
le fait d'amener le repère de référence à être irradié avec la lumière auxiliaire et le fait d'amener une image fluorescente à partir du repère de référence à être imagée dans une deuxième période, afin de détecter la position des repères de référence avec une précision plus élevée,
le fait de provoquer l'arrêt de l'irradiation avec la lumière d'excitation dans la deuxième période ou le fait de provoquer la réduction de l'intensité de la lumière d'excitation dans la deuxième période pour qu'elle soit inférieure à l'intensité de la lumière d'excitation dans la première période, et
le fait de provoquer l'arrêt de l'irradiation avec la lumière auxiliaire dans la première période ou le fait de provoquer la réduction de l'intensité de la lumière auxiliaire dans la première période pour qu'elle soit inférieure à l'intensité de la lumière auxiliaire dans la deuxième période,
le traitement d'image comprenant une correction d'au moins une partie d'un résultat d'imagerie obtenu dans la première période à l'aide d'un résultat d'imagerie obtenu dans la deuxième période et une génération d'une image à l'aide d'au moins une partie du résultat d'imagerie corrigé,
dans lequel une longueur d'onde de la lumière d'excitation et une longueur d'onde de la lumière auxiliaire sont différentes l'une de l'autre.

11. Programme de commande amenant un ordinateur à exécuter une commande d'un dispositif de microscope (1) qui émet une lumière d'activation pour activer une substance fluorescente présente dans un échantillon, une lumière d'excitation pour exciter la substance fluorescente activée, et une lumière auxiliaire pour exciter un repère de référence ; forme une image fluorescente à partir de la substance fluorescente ; image l'image fluorescente ; met en oeuvre un traitement d'image à l'aide d'un résultat de l'imagerie ; et commande l'imagerie,
la commande du dispositif de microscope comprenant :
le fait d'amener la substance fluorescente activée à être irradiée avec la lumière d'excitation et le fait d'amener une image fluorescente à partir de la substance fluorescente activée à être imagée dans une pluralité de périodes de trame dans une première période,
le fait d'amener le repère de référence à être irradié avec la lumière auxiliaire et le fait d'amener une image fluorescente à partir du repère de référence à être imagé dans une deuxième période, afin de détecter la position des repères de référence avec une précision plus élevée,
le fait de provoquer l'arrêt de l'irradiation avec la lumière d'excitation dans la deuxième période ou le fait de provoquer la réduction de l'intensité de la lumière d'excitation dans la deuxième période pour qu'elle soit inférieure à l'intensité de la lumière d'excitation dans la première période, et
le fait de provoquer l'arrêt de l'irradiation avec la lumière auxiliaire dans la première période ou le fait de provoquer la réduction de l'intensité de la lumière auxiliaire dans la première période pour qu'elle soit inférieure à l'intensité de la lumière auxiliaire dans la deuxième période, le traitement d'image comprenant une correction d'au moins une partie d'un résultat d'imagerie obtenu dans la première période à l'aide d'un résultat d'imagerie obtenu dans la deuxième période et une génération d'une image à l'aide d'au moins une partie du résultat d'imagerie corrigé,
dans lequel une longueur d'onde de la lumière d'excitation et une longueur d'onde de la lumière auxiliaire sont différentes l'une de l'autre.
